(19) Europäisches Patentamt
European Patent Office
Office européen des brevets

(11) **EP 4 770 225 A1**

(12) **EUROPEAN PATENT APPLICATION**
published in accordance with Art. 153(4) EPC

(43) Date of publication:
**01.07.2026 Bulletin 2026/27**

(21) Application number: **24864606.9**

(22) Date of filing: **10.09.2024**

(51) International Patent Classification (IPC):
*H04W 68/02* (2009.01)

(52) Cooperative Patent Classification (CPC):
**H04W 68/00; H04W 68/02**

(86) International application number:
**PCT/CN2024/117955**

(87) International publication number:
**WO 2025/055887 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.09.2023 CN 202311178980**

(71) Applicant: **HUAWEI TECHNOLOGIES CO., LTD.
Shenzhen, Guangdong 518129 (CN)**

(72) Inventors:
• **YU, Tong
  Shenzhen, Guangdong 518129 (CN)**
• **LIAO, Shuri
  Shenzhen, Guangdong 518129 (CN)**
• **SHI, Meng
  Shenzhen, Guangdong 518129 (CN)**
• **YANG, Liu
  Shenzhen, Guangdong 518129 (CN)**
• **DOU, Shengyue
  Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND RELATED APPARATUS**

(57) A communication method and a related apparatus are provided. The method includes: receiving first indication information, where the first indication information indicates an index of a first geographical area to which first location information belongs, and the first location information is location information of a terminal device; and determining a first PO based on the index of the first geographical area. The first geographical area is smaller than a spatial coverage area of an SSB beam. Embodiments of this application help increase a paging success rate.

FIG. 4

## Description

This application claims priority to Chinese Patent Application No. 202311178980.X, filed with the China National Intellectual Property Administration on September 12, 2023 and entitled "COMMUNICATION METHOD AND RELATED APPARATUS", which is incorporated herein by reference in its entirety.

## TECHNICAL FIELD

This application relates to the field of communication technologies, and in particular, to a communication method and a related apparatus.

## BACKGROUND

In comparison with terrestrial network communication (for example, terrestrial cellular network communication), non-terrestrial network (non-terrestrial network, NTN) communication (for example, satellite communication) has advantages such as a long communication distance, a large coverage area size, and a wide communication frequency band, and can provide a communication service for a user anytime and anywhere. In the NTN communication, due to reasons such as limited satellite power and an excessively long distance between a terminal device and a satellite, a link budget is limited. To be specific, a signal-to-noise ratio of a signal received by the terminal device is low, or even demodulation cannot be performed. Especially when the terminal device is in a radio resource control (radio resource control, RRC) idle state, a user usually places the terminal device in a pocket or a file bag. In this case, the link budget further deteriorates. If an access network device needs to page the terminal device, the terminal device may fail to correctly receive a paging message, and therefore miss paging. Therefore, how to ensure a link budget of a paging channel so as to increase a paging success rate becomes an urgent problem to be resolved currently.

## SUMMARY

This application provides a communication method and a related apparatus, to help increase a paging success rate.

According to a first aspect, this application provides a communication method, which is performed by a terminal device. The terminal device may be the terminal device, or may be a unit or module (for example, a chip) that has a corresponding function in the terminal device. In the method, the terminal device receives first indication information, where the first indication information indicates an index of a first geographical area to which first location information belongs, and the first location information is location information of the terminal device; and the terminal device determines a first paging occasion PO based on the index of the first geographical area.

In a possible design, the first geographical area is smaller than a spatial coverage area of a synchronization signal block SSB beam (or referred to as a wide beam). It should be understood that, in this application, a spatial coverage area of a transmit beam that is used for paging and that is on a network side is related to an area size of the first geographical area. Usually, the area size of the first geographical area may be equal to the spatial coverage area of the transmit beam (which may also be referred to as a narrow beam), or the area size of the first geographical area is approximately equal to the spatial coverage area of the transmit beam. In other words, an area size difference between the area size of the first geographical area and the spatial coverage area of the transmit beam is less than or equal to a preset area size difference.

It should be noted that a wide beam paging solution is used in a conventional technology, and an SSB index is associated with a paging occasion (that is, there is a correspondence/association relationship between the SSB index and the paging occasion). Therefore, the terminal device needs to find the corresponding PO based on an SSB in which the terminal device is located, and then performs paging on the determined PO by using a wide beam. However, a signal-to-noise ratio of the wide beam is low. Therefore, this application proposes a narrow beam paging solution, and in this application, the PO corresponding to the terminal device is no longer determined based on the SSB in which the terminal device is located and the association relationship between the SSB index and the paging occasion, but a correspondence between the index of the geographical area and the paging occasion is established. In this way, the network side can perform paging on the terminal device by using a narrow beam (that is, a beam narrower than an SSB beam), thereby improving a link budget and helping increase a paging success rate.

In a possible design, determining the first PO based on the index of the first geographical area includes: determining the first PO based on the index of the first geographical area and one or more of the following: a paging cycle, a quantity of paging frames included in the paging cycle, a quantity of POs included in the paging frame, or an offset used for determining the paging frame.

In this implementation, the paging occasion may be calculated based on the index of the first geographical area. This helps unbind the SSB index from the PO, and the beam narrower than the SSB beam may be used for performing paging on the UE. In addition, the narrower beam may have a higher antenna gain, thereby improving a link budget of a paging channel and increasing the paging success rate. When an index of a geographical area corresponds to a narrow beam, it may be understood as that different terminal devices in the narrow beam have a same paging occasion.

In a possible design, a paging frame in which the first PO is located satisfies:

$$(SFN+PF\_offset) \bmod T=(T \operatorname{div} N)*(Area \ Index \bmod N),$$

where

SFN is a system frame number of the paging frame in which the first PO is located, PF_offset is the offset used for determining the paging frame, T is the paging cycle, N is the quantity of paging frames included in the paging cycle, and Area Index is the index of the first geographical area.

In a possible design, a PO index of the first PO satisfies:

$$i\_s=floor \ (Area\_index/N) \bmod Ns,$$

where

i_s is the PO index of the first PO, Area Index is the index of the first geographical area, N is the quantity of paging frames included in the paging cycle, and Ns is the quantity of POs included in the paging frame.

In a possible design, the first indication information further indicates a first offset and/or a second offset corresponding to the terminal device, the first offset is used for determining a paging frame corresponding to the terminal device, and the second offset is used for determining a paging occasion corresponding to the terminal device; and

determining the first PO based on the index of the first geographical area includes:

determining the first PO based on the first offset and/or the second offset, the index of the first geographical area, and one or more of the following: a paging cycle, a quantity of paging frames included in the paging cycle, or a quantity of POs included in the paging frame.

In this implementation, when an index of a geographical area corresponds to a narrow beam, different terminal devices in the narrow beam have a same paging occasion. When a quantity of terminal devices in a narrow beam is too large, a problem that paging cannot be performed simultaneously may occur. Therefore, it is further proposed in this application that terminal devices in a same narrow beam may be grouped. Specifically, this may be implemented in a manner in which a user-level offset (namely, the first offset) used for determining a paging frame and/or a user-level offset (that is, the second offset) used for determining a paging occasion are/is allocated/configured by an access network device to the terminal devices. The solution is highly operable.

In a possible design, the first indication information further indicates the first offset corresponding to the terminal device, and a paging frame in which the first PO is located satisfies:

$$(SFN+UE\_specific\_PF\_offset) \bmod T=(T \operatorname{div} N)*(Area \ Index \bmod N),$$

where

SFN is a system frame number of the paging frame in which the first PO is located, UE_specific_PF_offset is the first offset, T is the paging cycle, N is the quantity of paging frames included in the paging cycle, and Area Index is the index of the first geographical area.

In this implementation, terminal devices to which different UE_specific_PF_offset is allocated correspond to different paging frames.

In a possible design, the first indication information further indicates the second offset corresponding to the terminal device, and a PO index of the first PO satisfies:

$$(i\_s+UE\_specific\_PO\_offset)=floor \ (Area\_index/N) \bmod Ns,$$

where

i_s is the PO index of the first PO, UE_specific_PO_offset is the second offset, Area Index is the index of the first geographical area, N is the quantity of paging frames included in the paging cycle, and Ns is the quantity of POs included in the paging frame.

In this implementation, POs corresponding to terminal devices to which different UE_specific_PO_offset is allocated have different PO locations in the paging frames. Specifically, when UE_specific_PF_offset is not allocated and UE_specific_PO_offset is allocated, for the terminal devices to which different UE_specific_PO_offset is allocated, paging frames corresponding to different terminal devices are the same, but PO indexes of the POs that are of different terminal devices and that are in the paging frames are different. When UE_specific_PF_offset is allocated and UE_specific_PO_offset is not allocated, for the terminal devices to which different UE_specific_PF_offset is allocated, the paging frames corresponding to the terminal devices are different, but PO locations of POs that are of the terminal devices and that are in different paging frames are the same. When UE_specific_PF_offset and UE_specific_PO_offset are allocated, for terminal devices to which different UE_specific_PF_offset and UE_specific_PO_offset are allocated, paging frames corresponding to the terminal devices are different, and PO indexes of POs in the paging frames are also different.

According to a second aspect, this application provides a communication method, which is performed by a terminal device. The terminal device may be the terminal device, or may be a unit or module (for example, a chip) that has a corresponding function in the terminal device. In the method, the terminal device receives center point location information of each of at least one beam and a third offset and/or a fourth offset corresponding to each beam, where the third offset is used for determining a paging frame corresponding to the beam, the fourth offset is used for determining a paging occasion corresponding to the beam, and a spatial coverage area of the beam is smaller than a spatial coverage area of a synchronization signal block SSB beam (that is, the beam in this application is a narrow beam); the terminal device determines, based on location information of the terminal device and the center point location information of each beam, a first beam in which the terminal device is located, where the first beam is included in the at least one beam; and the terminal device determines a first paging occasion PO based on a third offset and/or a fourth offset corresponding to the first beam.

It should be understood that the third offset and/or the fourth offset are/is a narrow beam-level configuration. In this embodiment of this application, the center point location information of each narrow beam and PO_offset and/or PF_offset corresponding to the narrow beam are broadcast, so that the terminal device determines the narrow beam in which the terminal device is located and a corresponding PO location, and paging occasions of different narrow beams can be configured in a staggered manner. In this way, an association relationship between an SSB index and a PO in a conventional technology can also be unbound, and an access network device can perform paging on the terminal device by using the narrow beam, thereby improving a link budget and increasing a paging success rate.

In a possible design, determining the first PO based on the third offset and/or the fourth offset corresponding to the first beam includes:

determining the first PO based on the third offset and/or the fourth offset corresponding to the first beam, and one or more of the following: a paging cycle, a quantity of paging frames included in the paging cycle, a quantity of POs included in the paging frame, or a group index of the terminal device.

In a possible design, a paging frame in which the first PO is located satisfies:

$$(SFN+beam\_specific\_PF\_offset) \bmod T = (T \ div \ N)*(UE\_ID \bmod N),$$

where

SFN is a system frame number of the paging frame in which the first PO is located, beam_specific_PF_offset is the third offset corresponding to the first beam, T is the paging cycle, N is the quantity of paging frames included in the paging cycle, and UE_ID is an identifier of the terminal device.

In a possible design, a PO index of the first PO satisfies:

$$(i\_s+beam\_specific\_PO\_offset)=floor \ (UE\_ID/N) \bmod Ns,$$

where

i_s is the PO index of the first PO, beam_specific_PO_offset is the fourth offset corresponding to the first beam, UE_ID is the identifier of the terminal device, N is the quantity of paging frames included in the paging cycle, and Ns is the quantity of POs included in the paging frame.

According to a third aspect, this application provides a communication method, which is performed by a network device. The network device may be the network device, or may be a unit or module (for example, a chip) that has a corresponding function in the network device. In the method, the network device determines second indication information; and the network device sends the second indication information, where the second indication information indicates a terminal identifier allocated to a terminal device, the terminal identifier is determined based on first location information, and the first location information is location information of the terminal device.

In the solution in the third aspect, the network device may be a core network element, an access network device, an operation administration and maintenance (operation administration and maintenance, OAM), or the like. This is not limited herein. The following separately describes cases in which the network device is the core network element and the access network device. When the network device is the core network element, the core network element may determine, based on the location information of the terminal device, the terminal identifier (for example, a temporary mobile subscription identifier (temporary mobile subscription identifier, TMSI)) allocated to the terminal device, and send, to an access network device, the second indication information indicating the TMSI. Then, the access network device truncates the received TMSI, generates a 5th generation-short-temporary mobile subscription identifier (5G-S-temporary mobile subscription identifier, 5G-S-TMSI), and sends the 5th generation-short-temporary mobile subscription identifier to the terminal device. When the network device is the access network device, the access network device may determine, based on a TMSI received from a core network element, the terminal identifier (for example, a 5G-S-TMSI) allocated to the terminal device, and then send, to the terminal device, the second indication information indicating the 5G-S-TMSI.

In a possible design, when the network device is the access network device, the terminal identifier is the 5G-S-TMSI.

In a possible design, the method further includes:
The access network device determines a first paging occasion PO based on the terminal identifier.

In this embodiment of this application, a network side allocates the 5G-S-TMSI to the terminal device based on the location information of the terminal device, so that POs of different narrow beams can be configured in a staggered manner, and the access network device can perform paging on the terminal device by using the narrow beam, thereby improving a link budget and increasing a paging success rate.

According to a fourth aspect, this application provides a communication method, which is performed by a network device. The network device may be the network device, or may be a unit or module (for example, a chip) that has a corresponding function in the network device. In the method, the network device determines first indication information, where the first indication information indicates an index of a first geographical area to which first location information belongs, and the first location information is location information of a terminal device; and the network device sends the first indication information.

In the solution in the fourth aspect, the network device may be a core network element, an access network device, an OAM, or the like. This is not limited herein. The following separately describes cases in which the network device is the core network element and the access network device. When the network device is the core network element, the core network element may determine, based on the obtained location information of the terminal device, the index of the first geographical area to which the terminal device belongs, and send, to the terminal device via an access network device, the first indication information indicating the index of the first geographical area. When the network device is the access network device, if the access network device has obtained a physical area division rule, the access network device may determine, based on the obtained location information of the terminal device, the index of the first geographical area to which the terminal device belongs, and directly, to the terminal device, the first indication information indicating the index of the first geographical area.

In a possible design, when the network device is the access network device, the method further includes:
The access network device determines a first paging occasion PO based on the index of the first geographical area.

In a possible design, that the access network device determines the first PO based on the index of the first geographical area includes:
The access network device determines the first PO based on the index of the first geographical area and one or more of the following: a paging cycle, a quantity of paging frames included in the paging cycle, a quantity of POs included in the paging frame, or an offset used for determining the paging frame.

In a possible design, a paging frame in which the first PO is located satisfies:

$$(SFN+PF\_offset) \bmod T = (T \bmod N)*(Area\ Index \bmod N),$$

where
SFN is a system frame number of the paging frame in which the first PO is located, PF_offset is the offset used for determining the paging frame, T is the paging cycle, N is the quantity of paging frames included in the paging cycle, and Area Index is the index of the first geographical area.

In a possible design, a PO index of the first PO satisfies:

$$i\_s = floor\ (Area\_index/N) \bmod Ns,$$

where
i_s is the PO index of the first PO, Area Index is the index of the first geographical area, N is the quantity of paging frames included in the paging cycle, and Ns is the quantity of POs included in the paging frame.

In a possible design, the first indication information further indicates a first offset and/or a second offset corresponding to the terminal device, the first offset is used for determining a paging frame corresponding to the terminal device, and the second offset is used for determining a paging occasion corresponding to the terminal device; and that the access network device determines the first PO based on the index of the first geographical area includes:

The access network device determines the first PO based on the first offset and/or the second offset, the index of the first geographical area, and one or more of the following: a paging cycle, a quantity of paging frames included in the paging cycle, or a quantity of POs included in the paging frame.

In a possible design, the first indication information further indicates the first offset corresponding to the terminal device, and a paging frame in which the first PO is located satisfies:

$$(SFN+UE\_specific\_PF\_offset) \bmod T=(T \operatorname{div} N)*(Area\ Index \bmod N),$$

where
SFN is a system frame number of the paging frame in which the first PO is located, UE_specific_PF_offset is the first offset, T is the paging cycle, N is the quantity of paging frames included in the paging cycle, and Area Index is the index of the first geographical area.

In a possible design, the first indication information further indicates the second offset corresponding to the terminal device, and a PO index of the first PO satisfies:

$$(i\_s+UE\_specific\_PO\_offset)=\operatorname{floor}(Area\_index/N) \bmod Ns,$$

where
i_s is the PO index of the first PO, UE_specific_PO_offset is the second offset, Area Index is the index of the first geographical area, N is the quantity of paging frames included in the paging cycle, and Ns is the quantity of POs included in the paging frame.

In a possible design, the first geographical area is smaller than a spatial coverage area of a synchronization signal block SSB beam.

According to a fifth aspect, this application provides a communication method, which is performed by a network device. The network device may be the network device, or may be a unit or module (for example, a chip) that has a corresponding function in the network device. In the method, the network device sends center point location information of each of at least one beam and a third offset and/or a fourth offset corresponding to each beam, where the third offset is used for determining a paging frame corresponding to the beam, the fourth offset is used for determining a paging occasion corresponding to the beam, and a spatial coverage area of the beam is smaller than a spatial coverage area of a synchronization signal block SSB beam; the network device determines, based on location information of a terminal device and the center point location information of each beam, a first beam in which the terminal device is located, where the first beam is included in the at least one beam; and the network device determines a first paging occasion PO based on a third offset and/or a fourth offset corresponding to the first beam.

In the solution in the fifth aspect, the network device may be specifically an access network device.

In a possible design, determining the first PO based on the third offset and/or the fourth offset corresponding to the first beam includes:
determining the first PO based on the third offset and/or the fourth offset corresponding to the first beam, and one or more of the following: a paging cycle, a quantity of paging frames included in the paging cycle, a quantity of POs included in the paging frame, or a group index of the terminal device.

In a possible design, a paging frame in which the first PO is located satisfies:

$$(SFN+beam\_specific\_PF\_offset) \bmod T=(T \operatorname{div} N)*(UE\_ID \bmod N),$$

where
SFN is a system frame number of the paging frame in which the first PO is located, beam_specific_PF_offset is the third offset corresponding to the first beam, T is the paging cycle, N is the quantity of paging frames included in the paging cycle, and UE_ID is an identifier of the terminal device.

In a possible design, a PO index of the first PO satisfies:

$$(i\_s+beam\_specific\_PO\_offset)=\operatorname{floor}(UE\_ID/N) \bmod Ns,$$

where
i_s is the PO index of the first PO, beam_specific_PO_offset is the fourth offset corresponding to the first beam, UE_ID is the identifier of the terminal device, N is the quantity of paging frames included in the paging cycle, and Ns is the quantity of POs included in the paging frame.

According to a sixth aspect, this application provides a communication apparatus. The communication apparatus may be the communication apparatus, or a module, a chip, or a unit in the communication apparatus. For example, the communication apparatus may be a terminal device. The communication apparatus includes:

a transceiver unit, configured to receive first indication information, where the first indication information indicates an index of a first geographical area to which first location information belongs, and the first location information is location information of the terminal device; and
a processing unit, configured to determine a first paging occasion PO based on the index of the first geographical area.

In a possible design, when determining the first PO based on the index of the first geographical area, the processing unit is configured to:
determine the first PO based on the index of the first geographical area and one or more of the following: a paging cycle, a quantity of paging frames included in the paging cycle, a quantity of POs included in the paging frame, or an offset used for determining the paging frame.

In a possible design, a paging frame in which the first PO is located satisfies:

$$(SFN + PF\_offset) \bmod T = (T \operatorname{div} N)*(\text{Area Index} \bmod N),$$

where
SFN is a system frame number of the paging frame in which the first PO is located, PF_offset is the offset used for determining the paging frame, T is the paging cycle, N is the quantity of paging frames included in the paging cycle, and Area Index is the index of the first geographical area.

In a possible design, a PO index of the first PO satisfies:

$$i\_s = \text{floor}\,(\text{Area\_index}/N) \bmod Ns,$$

where
i_s is the PO index of the first PO, Area Index is the index of the first geographical area, N is the quantity of paging frames included in the paging cycle, and Ns is the quantity of POs included in the paging frame.

In a possible design, the first indication information further indicates a first offset and/or a second offset corresponding to the terminal device, the first offset is used for determining a paging frame corresponding to the terminal device, and the second offset is used for determining a paging occasion corresponding to the terminal device; and when determining the first PO based on the index of the first geographical area, the processing unit is configured to:
determine the first PO based on the first offset and/or the second offset, the index of the first geographical area, and one or more of the following: a paging cycle, a quantity of paging frames included in the paging cycle, or a quantity of POs included in the paging frame.

In a possible design, the first indication information further indicates the first offset corresponding to the terminal device, and a paging frame in which the first PO is located satisfies:

$$(SFN + UE\_specific\_PF\_offset) \bmod T = (T \operatorname{div} N)*(\text{Area Index} \bmod N),$$

where
SFN is a system frame number of the paging frame in which the first PO is located, UE_specific_PF_offset is the first offset, T is the paging cycle, N is the quantity of paging frames included in the paging cycle, and Area Index is the index of the first geographical area.

In a possible design, the first indication information further indicates the second offset corresponding to the terminal device, and a PO index of the first PO satisfies:

$$(i\_s + UE\_specific\_PO\_offset) = \text{floor}\,(\text{Area\_index}/N) \bmod Ns,$$

where
i_s is the PO index of the first PO, UE_specific_PO_offset is the second offset, Area Index is the index of the first geographical area, N is the quantity of paging frames included in the paging cycle, and Ns is the quantity of POs included in the paging frame.

In a possible design, the first geographical area is smaller than a spatial coverage area of a synchronization signal block SSB beam.

According to a seventh aspect, this application provides a communication apparatus. The communication apparatus may be the communication apparatus, or a module, a chip, or a unit in the communication apparatus. For example, the communication apparatus may be a terminal device. The communication apparatus includes:

a transceiver unit, configured to receive center point location information of each of at least one beam and a third offset and/or a fourth offset corresponding to each beam, where the third offset is used for determining a paging frame corresponding to the beam, the fourth offset is used for determining a paging occasion corresponding to the beam, and a spatial coverage area of the beam is smaller than a spatial coverage area of a synchronization signal block SSB beam; and

a processing unit, configured to determine, based on location information of the terminal device and the center point location information of each beam, a first beam in which the terminal device is located, where the first beam is included in the at least one beam.

The processing unit is configured to determine a first paging occasion PO based on a third offset and/or a fourth offset corresponding to the first beam.

In a possible design, when determining the first PO based on the third offset and/or the fourth offset corresponding to the first beam, the processing unit is configured to:
determine the first PO based on the third offset and/or the fourth offset corresponding to the first beam, and one or more of the following: a paging cycle, a quantity of paging frames included in the paging cycle, a quantity of POs included in the paging frame, or a group index of the terminal device.

In a possible design, a paging frame in which the first PO is located satisfies:

$$(\mathrm{SFN}+\mathrm{beam\_specific\_PF\_offset}) \bmod \mathrm{T}=(\mathrm{T} \operatorname{div} \mathrm{N})*(\mathrm{UE\_ID} \bmod \mathrm{N}),$$

where
SFN is a system frame number of the paging frame in which the first PO is located, beam_specific_PF_offset is the third offset corresponding to the first beam, T is the paging cycle, N is the quantity of paging frames included in the paging cycle, and UE_ID is an identifier of the terminal device.

In a possible design, a PO index of the first PO satisfies:

$$(\mathrm{i\_s}+\mathrm{beam\_specific\_PO\_offset})=\mathrm{floor}\,(\mathrm{UE\_ID}/\mathrm{N}) \bmod \mathrm{Ns},$$

where
i_s is the PO index of the first PO, beam_specific_PO_offset is the fourth offset corresponding to the first beam, UE_ID is the identifier of the terminal device, N is the quantity of paging frames included in the paging cycle, and Ns is the quantity of POs included in the paging frame.

According to an eighth aspect, this application provides a communication apparatus. The communication apparatus may be the communication apparatus, or a module, a chip, or a unit in the communication apparatus. For example, a network device may be a core network element, an access network device, an OAM, or the like. The communication apparatus includes:

a processing unit, configured to determine second indication information; and

a transceiver unit, configured to send the second indication information, where the second indication information indicates a terminal identifier allocated to a terminal device, the terminal identifier is determined based on first location information, and the first location information is location information of the terminal device.

In a possible design, the terminal identifier is a 5G-S-TMSI.

In a possible design, when the communication apparatus is the access network device, the processing unit is further configured to:
determine a first paging occasion PO based on the terminal identifier.

According to a ninth aspect, this application provides a communication apparatus. The communication apparatus may be the communication apparatus, or a module, a chip, or a unit in the communication apparatus. For example, a network device may be a core network element, an access network device, an OAM, or the like. The communication apparatus includes:

a processing unit, configured to determine first indication information, where the first indication information indicates an index of a first geographical area to which first location information belongs, and the first location information is location information of a terminal device; and

a transceiver unit, configured to send the first indication information.

In a possible design, when the communication apparatus is the access network device, the processing unit is further configured to:

determine a first paging occasion PO based on the index of the first geographical area.

In a possible design, when determining the first PO based on the index of the first geographical area, the processing unit of the access network device is configured to:

determine the first PO based on the index of the first geographical area and one or more of the following: a paging cycle, a quantity of paging frames included in the paging cycle, a quantity of POs included in the paging frame, or an offset used for determining the paging frame.

In a possible design, a paging frame in which the first PO is located satisfies:

$$(SFN+PF\_offset) \bmod T=(T \ div \ N)*(Area \ Index \bmod N),$$

where

SFN is a system frame number of the paging frame in which the first PO is located, PF_offset is the offset used for determining the paging frame, T is the paging cycle, N is the quantity of paging frames included in the paging cycle, and Area Index is the index of the first geographical area.

In a possible design, a PO index of the first PO satisfies:

$$i\_s=floor \ (Area\_index/N) \bmod Ns,$$

where

i_s is the PO index of the first PO, Area Index is the index of the first geographical area, N is the quantity of paging frames included in the paging cycle, and Ns is the quantity of POs included in the paging frame.

In a possible design, the first indication information further indicates a first offset and/or a second offset corresponding to the terminal device, the first offset is used for determining a paging frame corresponding to the terminal device, and the second offset is used for determining a paging occasion corresponding to the terminal device; and

when determining the first PO based on the index of the first geographical area, the processing unit of the access network device is configured to:

determine the first PO based on the first offset and/or the second offset, the index of the first geographical area, and one or more of the following: a paging cycle, a quantity of paging frames included in the paging cycle, or a quantity of POs included in the paging frame.

In a possible design, the first indication information further indicates the first offset corresponding to the terminal device, and a paging frame in which the first PO is located satisfies:

$$(SFN+UE\_specific\_PF\_offset) \bmod T=(T \ div \ N)*(Area \ Index \bmod N),$$

where

SFN is a system frame number of the paging frame in which the first PO is located, UE_specific_PF_offset is the first offset, T is the paging cycle, N is the quantity of paging frames included in the paging cycle, and Area Index is the index of the first geographical area.

In a possible design, the first indication information further indicates the second offset corresponding to the terminal device, and a PO index of the first PO satisfies:

$$(i\_s+UE\_specific\_PO\_offset)=floor \ (Area\_index/N) \bmod Ns,$$

where

i_s is the PO index of the first PO, UE_specific_PO_offset is the second offset, Area Index is the index of the first geographical area, N is the quantity of paging frames included in the paging cycle, and Ns is the quantity of POs included in the paging frame.

In a possible design, the first geographical area is smaller than a spatial coverage area of a synchronization signal block SSB beam.

According to a tenth aspect, this application provides a communication apparatus. The communication apparatus may be the communication apparatus, or a module, a chip, or a unit in the communication apparatus. For example, a network device may be an access network device or the like. The communication apparatus includes:

a transceiver unit, configured to send center point location information of each of at least one beam and a third offset and/or a fourth offset corresponding to each beam, where the third offset is used for determining a paging frame corresponding to the beam, the fourth offset is used for determining a paging occasion corresponding to the beam, and a spatial coverage area of the beam is smaller than a spatial coverage area of a synchronization signal block SSB beam; and

a processing unit, configured to determine, based on location information of a terminal device and the center point location information of each beam, a first beam in which the terminal device is located, where the first beam is included in the at least one beam.

The processing unit is configured to determine a first paging occasion PO based on a third offset and/or a fourth offset corresponding to the first beam.

In a possible design, when determining the first PO based on the third offset and/or the fourth offset corresponding to the first beam, the processing unit is configured to:

determine the first PO based on the third offset and/or the fourth offset corresponding to the first beam, and one or more of the following: a paging cycle, a quantity of paging frames included in the paging cycle, a quantity of POs included in the paging frame, or a group index of the terminal device.

In a possible design, a paging frame in which the first PO is located satisfies:

$$(SFN + beam\_specific\_PF\_offset) \bmod T = (T \operatorname{div} N)*(UE\_ID \bmod N),$$

where

SFN is a system frame number of the paging frame in which the first PO is located, beam_specific_PF_offset is the third offset corresponding to the first beam, T is the paging cycle, N is the quantity of paging frames included in the paging cycle, and UE_ID is an identifier of the terminal device.

In a possible design, a PO index of the first PO satisfies:

$$(i\_s + beam\_specific\_PO\_offset) = floor(UE\_ID/N) \bmod Ns,$$

where

i_s is the PO index of the first PO, beam_specific_PO_offset is the fourth offset corresponding to the first beam, UE_ID is the identifier of the terminal device, N is the quantity of paging frames included in the paging cycle, and Ns is the quantity of POs included in the paging frame.

According to an eleventh aspect, this application provides a communication apparatus. The communication apparatus includes a processor, and the processor is configured to execute a computer program, to cause the communication apparatus to perform the method according to any one of the first aspect to the fifth aspect.

In a possible design, the communication apparatus may be a chip that implements the method according to any one of the first aspect to the fifth aspect or a device including the chip.

In a possible design, the communication apparatus further includes a transceiver. The processor is coupled to the transceiver.

In a possible design, the communication apparatus further includes a memory. The processor is coupled to the memory, the memory stores a computer program, and the processor is further configured to invoke the computer program in the memory. For example, the processor and the memory may also be integrated together.

According to a twelfth aspect, this application provides a communication apparatus. The communication apparatus includes a processor, and the processor is configured to implement the method according to any one of the first aspect to the fifth aspect by using a logic circuit or executing code instructions.

Optionally, the communication apparatus further includes an interface circuit. The interface circuit is configured to: receive a signal from a communication apparatus other than the communication apparatus and transmit the signal to the processor, or send a signal from the processor to a communication apparatus other than the communication apparatus.

According to a thirteenth aspect, this application provides a computer-readable storage medium. The storage medium stores a computer program or instructions. When the computer program or the instructions are executed by a computer, the method according to any one of the first aspect to the fifth aspect is implemented.

According to a fourteenth aspect, this application provides a computer program product. When a computer reads and executes the computer program product, the computer is caused to perform the method according to any one of the first aspect to the fifth aspect.

According to a fifteenth aspect, this application provides a communication system. The communication system includes a communication apparatus configured to implement the method according to either the first aspect or the second aspect, and includes a communication apparatus configured to implement the method according to any one of the third aspect, the fourth aspect, or the fifth aspect.

For beneficial effects of the fifth aspect to the fifteenth aspect, refer to the beneficial effects of the first aspect to the third aspect. Details are not described herein again.

## BRIEF DESCRIPTION OF DRAWINGS

FIG. 1 is a diagram of an architecture of a communication system to which an embodiment of this application is applied;

FIG. 2 is a diagram of an architecture of another communication system to which an embodiment of this application is applied;

FIG. 3 is a diagram of a paging occasion and a paging cycle;

FIG. 4 is a schematic interaction flowchart of a communication method according to an embodiment of this application;

FIG. 5 is a diagram of geographical area division according to an embodiment of this application;

FIG. 6 is a diagram of a wide beam and a narrow beam according to an embodiment of this application;

FIG. 7 is another schematic interaction flowchart of a communication method according to an embodiment of this application;

FIG. 8 is still another schematic interaction flowchart of a communication method according to an embodiment of this application;

FIG. 9 is still another schematic interaction flowchart of a communication method according to an embodiment of this application;

FIG. 10 is another diagram of a wide beam and a narrow beam according to an embodiment of this application;

FIG. 11 is a diagram of a structure of a possible communication apparatus according to an embodiment of this application; and

FIG. 12 is a diagram of a structure of a possible communication apparatus according to an embodiment of this application.

## DESCRIPTION OF EMBODIMENTS

The following further describes specific embodiments of this application in detail with reference to accompanying drawings.

Terms "first", "second", and the like in this specification, the claims, and the accompanying drawings of this application are used to distinguish between different objects but do not indicate a particular sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiment" mentioned in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

To better understand embodiments of this application, the following first describes a system architecture in embodiments of this application.

The technical solutions of this application may be applied to a non-terrestrial network (non-terrestrial network, NTN) scenario or a scenario in which the NTN and a terrestrial network (terrestrial network, TN) are integrated. An NTN system may be, for example, a satellite communication system, a high altitude platform station (high altitude platform station, HAPS) communication system, or a global navigation satellite system (global navigation satellite system, GNSS). A TN system may be, for example, a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), a 6th generation mobile communication (6th generation mobile communication, 6G) system, or a future mobile communication system.

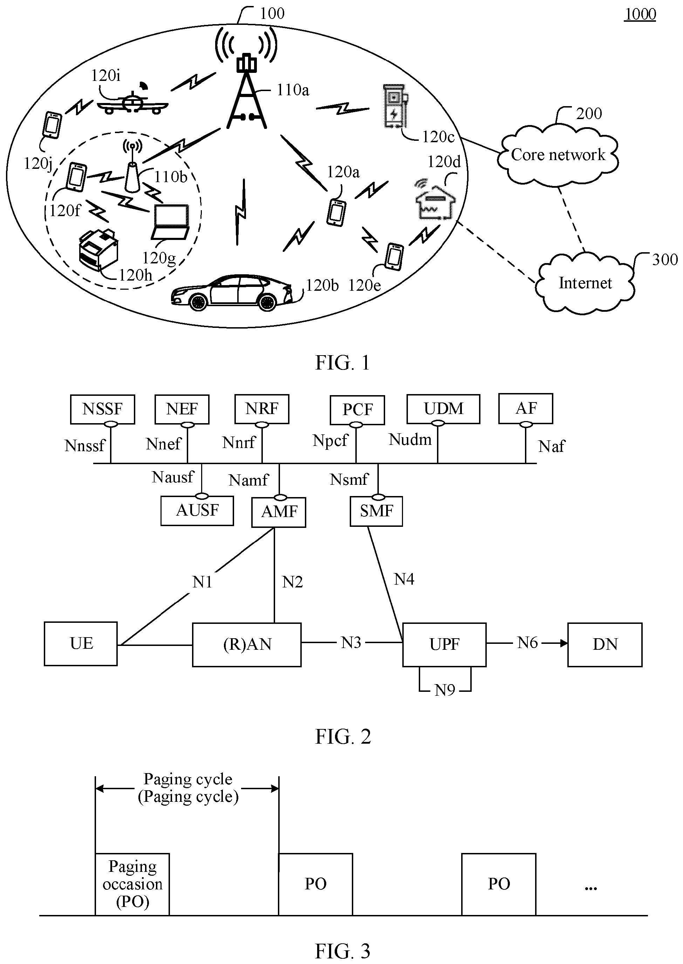

FIG. 1 is a diagram of an architecture of a communication system to which an embodiment of this application is applied. As shown in FIG. 1, the communication system 1000 includes a radio access network (radio access network, RAN) 100 and a core network (core network, CN) 200. Optionally, the communication system 1000 may further include an internet 300. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network element in the core network 200 and the RAN node 110 in the RAN 100 may be different physical devices, or may be a same physical device that integrates a core network logical function and a radio access network logical function.

The RAN 100 may be a cellular system related to a 3rd generation partnership project (3rd generation partnership project, 3GPP), for example, a 4G mobile communication system, a 5G mobile communication system, or a future-oriented evolved system (for example, a 6G mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be referred to as an access network device, a RAN entity, an access node, or the like sometimes, and forms a part of the communication system, to help the terminal implement radio access. A plurality of RAN nodes 110 in the communication system 1000 may be nodes of a same type, or may be nodes of different types. In some scenarios, roles of the RAN node 110 and the terminal 120 are relative to each other. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Sometimes, the RAN node 110 and the terminal 120 are both referred to as communication apparatuses. For example, the base stations 110a and 110b in FIG. 1 may be understood as communication apparatuses having a base station function, and the terminals 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). All or a part of functions of the RAN node in this application may alternatively be implemented by using a software function running on hardware, or may be implemented by using a virtualization function instantiated on a platform (for example, a cloud platform). Alternatively, the RAN node in this application may be a logical node, a logical module, or software that can implement all or a part of functions of the RAN node.

In another possible scenario, the plurality of RAN nodes collaborate to assist the terminal in implementing wireless access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to technical specifications related to the 3rd generation partnership project (3rd generation partnership project, 3GPP). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In still another possible scenario, the RAN node may be a non-terrestrial device, for example, a device deployed on a high-altitude platform or a satellite. This is not limited in this application. The satellite may be, for example, a medium-Earth orbit (medium-earth orbit, MEO) satellite or a low-Earth orbit (low-earth orbit, LEO) satellite in a non-geostationary earth orbit (non-geostationary earth orbit, NGEO), or a high altitude platform station (high altitude platform station, HAPS).

Optionally, the RAN node may also have different expressions, for example, an access network device. In this application, unless otherwise specified, the access network device is used for expression.

In different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may also be referred to as a terminal device, a user equipment (user equipment, UE), a mobile station, a mobile terminal, mobile equipment (mobile equipment, ME), or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IoT) scenario, a virtual reality scenario, an augmented reality scenario, an industrial control scenario, an autonomous driving scenario, a remote medical scenario, a smart grid scenario, a smart furniture scenario, a smart office scenario, a smart wearable scenario, a smart transportation scenario, and a smart city scenario. The terminal may be a mobile phone, a tablet, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

The core network may include one or more functional entities (or referred to as a core network element, a logical network element, a network element, an entity, or the like), for example, a network slice selection function (network slice selection function, NSSF), a network exposure function (network exposure function, NEF), a network repository function (network function repository function, NRF), a policy control function (policy control function, PCF), unified data management (unified data management, UDM), an application function (application function, AF), an access and mobility management function (access and mobility management function, AMF), an authentication server function (authentication server function, AUSF), a session management function (session management function, SMF), and a user plane function (user plane function, UPF).

FIG. 2 is a diagram of an architecture of another communication system to which an embodiment of this application is applied. The communication system is a system architecture in a 5G non-roaming scenario. As shown in FIG. 2, the communication system includes an NSSF, an NEF, an NRF, a PCF, a UDM, an AF, an AMF, an AUSF, an SMF, a UE, a (radio) access network ((radio) access network, (R)AN), a UPF, and a data network (data network, DN).

1. User plane network element: The user plane network element serves as an interface to the data network, and completes functions such as user plane data forwarding, session/flow level-based charging statistics collection, and bandwidth throttling, that is, packet routing and forwarding, quality of service (quality of service, QoS) handling for user plane data, and the like.

In the 5G communication system, the user plane network element may be a UPF network element.

2. Authentication server: The authentication server performs security authentication on a user. In the 5G communication system, the authentication server may be the AUSF network element.

3. Mobility management network element: The mobility management network element is mainly for mobility management, access management, and the like. In the 5G communication system, the access management network element may be the AMF network element, and mainly performs functions such as mobility management and access authentication/authorization. In addition, the AMF network element is further responsible for transferring a user policy between the terminal and the PCF network element.

4. Session management network element: The session management network element is mainly for session management, allocation and management of an internet protocol (internet protocol, IP) address of a user equipment, selection an endpoint that can manage a user plane function interface, and a policy control and charging function interface, downlink data notification, and the like.

In the 5G communication system, the session management network element may be the SMF network element, and completes terminal IP address allocation, UPF selection, charging and QoS policy control, and the like.

5. Application network element: In the 5G communication system, the application network element may be the AF network element, represents an application function of a third party or an operator, is an interface for obtaining external application data in a 5G network, and is mainly for transferring a requirement of an application side on a network side.

6. Unified data management network element: The unified data management network element is responsible for management of a user identifier, subscription data, and authentication data, and registration management of a serving network element of the user. In the 5G communication system, the unified data management network element may be the UDM network element.

7. Policy control network element: The policy control network element includes a user subscription data management function, a policy control function, a charging policy control function, quality of service (quality of service, QoS) control, and the like, is configured to: provide a unified policy framework for governing network behavior, provide policy rule information for a control plane function network element (for example, the AMF or SMF network element), and so on.

In the 5G communication system, the policy control network element may be the PCF.

8. Network function repository function network element: The network function repository function network element provides a storage function and a selection function of network functional entity information for another core network element. In the 5G communication system, the network element may be the NRF network element.

9. Network exposure network element: In the 5G communication system, the network exposure network element may be the NEF network element, is mainly configured to expose a service and a capability of a 3GPP network function to the AF, and may also enable the AF to provide information for the 3GPP network function.

10. Network slice selection function network element: The network slice selection function network element is responsible for selecting a network slice for the UE. In the 5G communication system, the application network element may be the NSSF network element.

The foregoing function network element may be a network element in a hardware device, a software function running on dedicated hardware, or a virtualization function instantiated on a platform (for example, a cloud platform). One or more services may be obtained through division based on the foregoing function network element. Further, a service independent of a network function may exist. In this application, an instance of the function network element, an instance of the service included in the function network element, or an instance of the service independent of the network function may be referred to as a service instance.

In addition, although not shown, another possible network element, for example, an authentication, authorization, and accounting (authentication authorization and accounting, AAA) network element may be included in the CN. Optionally, the AF and/or the AAA may be independent of the CN. When the AF and the AAA are independent of the CN, the AF and the AAA may access the CN via the NEF.

It should be noted that the foregoing functional entities are only names, and the names do not constitute a limitation on the entities. For example, the session management function may alternatively be replaced with a "session management functional entity" or another name. In addition, the session management functional entity may alternatively correspond to an entity that includes another function in addition to the session management function. A user plane function may alternatively be replaced with a "user plane functional entity" or another name. In addition, the user plane functional entity may alternatively correspond to an entity that includes another function in addition to the user plane function. Unified descriptions are provided herein. Details are not described again below.

It should be noted that names of messages between network elements, names of parameters in the messages, or the like in the following embodiments of this application are merely examples, and there may be other names during specific implementation. This is not specifically limited in embodiments of this application.

In this application, "sending information to... (a terminal)" may be understood as that a destination end of the information is the terminal, and may include directly or indirectly sending the information to the terminal. "Receiving information from... (a terminal)" may be understood as that a source end of the information is the terminal, and may include directly or indirectly receiving the information from the terminal. Information may undergo necessary processing, for example, a format change, between the source end for sending the information and the destination end. However, the destination end may understand valid information from the source end. A similar expression in this application may be understood similarly, and details are not described herein.

It should be understood that the terminal device in embodiments of this application may be any one of the foregoing devices or a chip. This is not specifically limited herein. Either being a device or a chip, the terminal device can be manufactured, sold, or used as an independent product. In this embodiment and subsequent embodiments, only the terminal device is used as an example for description.

It should be understood that in embodiments of this application, an apparatus configured to implement a function of the access network device may be the access network device, or may be an apparatus that can support the access network device in implementing the function, for example, a chip system, or a combined device or component that can implement the function of the access network device. The apparatus may be mounted in the access network device. In this embodiment of this application, the chip system may include a chip, or may include a chip and another discrete component. In this embodiment and subsequent embodiments, only the access network device is used as an example for description.

It should be understood that in embodiments of this application, an apparatus configured to implement a function of the core network element may be the core network element, or may be an apparatus that can support the core network element in implementing the function, for example, a chip system, or a combined device or component that can implement the function of the core network element. The apparatus may be mounted in the core network element. In this embodiment of this application, the chip system may include a chip, or may include a chip and another discrete component. In this embodiment and subsequent embodiments, only the core network element is used as an example for description.

It should be understood that in embodiments of this application, an apparatus configured to implement a function of a network manager (for example, an operation administration and maintenance (operation administration and maintenance, OAM)) may be the network manager, or may be an apparatus that can support the network manager in implementing the function, for example, a chip system, or a combined device or component that can implement the function of the network manager. The apparatus may be mounted in the network manager. In this embodiment of this application, the chip system may include a chip, or may include a chip and another discrete component. In this embodiment and subsequent embodiments, only the network manager is used as an example for description.

It should be noted that the access network device, the core network element, and the network manager in embodiments of this application may also be collectively referred to as a network device.

The following explains and describes related technical features in embodiments of this application. It should be noted that, these explanations are intended to make embodiments of this application easier to understand, but should not be construed as a limitation to the protection scope claimed in this application.

1. NTN

In the NTN, a base station or some functions of the base station are deployed on a non-terrestrial device (for example, a ship, a high altitude platform, an uncrewed aerial vehicle, or a satellite), to provide seamless communication coverage for a terminal device. This improves reliability of a communication system. The NTN is a general term for all flying object networks, including a satellite communication network, a high altitude platform station (high altitude platform station, HAPS) system, an air-to-ground network, and the like. The NTN network can be deployed independently or as a supplement to a terrestrial network.

It should be noted that, for ease of understanding, an example in which the non-terrestrial device in the NTN is the satellite is used below merely for description, and this should not be considered as a specific limitation on this application. In comparison with a terrestrial communication network, the satellite communication network has some advantages. For example, the satellite communication network has features such as a long communication distance, a large coverage area size, and a wide communication frequency band, can provide a communication service for a user anytime and anywhere, and can be effectively used as a supplement to the terrestrial communication network to provide a more reliable communication service for the user.

2. Paging (paging)

In wireless communication, an access network device may send a paging message (paging message) to a terminal. The access network device sends two types of paging messages. One type is a paging message of a short message type, for example, a system message update indication or an earthquake and tsunami warning system (earthquake and tsunami warning system, ETWS) message. A terminal device in an RRC idle state (RRC_IDLE), an RRC inactive state (RRC_INACTIVE), or an RRC connected state (RRC_CONNECTED) can receive the paging message of the short message type. The other type is a paging message used for establishing a connection. A terminal device in an RRC idle state or an RRC inactive state may receive the paging message of this type, and a terminal device in an RRC connected state does not need to receive the paging message of this type.

The access network device may periodically send a paging message. In one paging cycle (paging cycle), there may be a plurality of paging frames (paging frames, PFs), and each PF may have one or more paging occasions (paging occasions, POs). For example, the terminal device is a UE 1. Both the access network device and the UE 1 may determine, based on a terminal identifier of the UE 1, a paging occasion corresponding to the UE 1. Each paging occasion is further formed by a plurality of monitoring occasions (monitoring occasions). In this way, the access network device may send paging downlink control information (downlink control information, DCI) on a monitoring occasion of a specific paging occasion corresponding to the UE 1, and send a paging message on a time-frequency resource indicated by the paging DCI. The paging DCI is used for scheduling the paging message (or referred to as that the paging DCI includes scheduling information of the paging message), the paging message is carried on a paging physical downlink shared channel (physical downlink shared channel, PDSCH), and the paging DCI is scrambled by using a paging radio network temporary identifier (paging radio network temporary identifier, P-RNTI). Correspondingly, the UE 1 may monitor the paging DCI based on the P-RNTI on the plurality of monitoring occasions of the paging occasion corresponding to the UE 1, and receive the paging message based on the received paging DCI, to obtain specific content of the paging message.

FIG. 3 is a diagram of a paging occasion and a paging cycle. As shown in FIG. 3, a terminal device in an RRC idle state or an RRC inactive state monitors one PO of the terminal device in each paging cycle, to determine whether a network side performs paging. Usually, the terminal device may calculate a PO location of the terminal device based on a terminal identifier of the terminal device and a paging-related parameter according to a calculation formula specified in a protocol. PO locations calculated by different terminal devices may be the same. In other words, a plurality of terminal devices may monitor a same PO.

For example, a PF is a system frame that satisfies the following formula:

$$(\text{SFN}+\text{PF\_offset}) \bmod T=(T \text{ div } N)*(\text{UE\_ID} \bmod N)$$

A PO index i_s of the PO satisfies:

$$\text{i\_s}=\text{floor}(\text{UE\_ID}/N) \bmod Ns$$

SFN is a system frame number, PF_offset is an offset used for determining a paging frame (offset used for PF determination), T is a paging cycle (or referred to as a discontinuous reception (discontinuous reception, DRX) cycle), N is a quantity of paging frames included in the paging cycle, UE_ID is an identifier of the terminal device, and Ns is a quantity of POs included in the paging frame.

Usually, T may be a minimum value in specific DRX and default DRX (that is, min(specific DRX, default DRX)), where the default DRX may be configured by using a system information block (system information block1, SIB), and the specific DRX may be configured by using a radio resource control (radio resource control, RRC) release message (RRC release). N, Ns, and PF_offset are configured by using the SIB.

It should be noted that the parameters such as T, N, Ns, and PF_offset described below may be cell-level configurations, or may be bandwidth part (bandwidth part, BWP)-level configurations. That is, different BWPs correspond to different T/N/Ns/PF_offset. This is not limited in this application. However, for ease of understanding, the parameters in forms of T, N, Ns, and PF_offset in the following are all understood as cell-level configurations.

It should be understood that, for UE_ID, if the terminal device is configured with eDRX, UE_ID=5G-S-TMSI mod 4096; or if the terminal device is not configured with eDRX, UE_ID=5G-S-TMSI mod 1024. A 5th generation-short-temporary mobile subscription identifier (5G-S-temporary mobile subscription identifier, 5G-S-TMSI) is the terminal identifier of the terminal device. Usually, one terminal device corresponds to one 5G-S-TMSI.

3. Beam

The beam is a main lobe of a radiation array pattern. On a base station side, a weight of an antenna is adjusted, so that a beam of a satellite may point to different directions and have different coverage areas. The spatial coverage area of the beam mentioned in this application means a coverage area of the beam on the ground. As the satellite moves and the weight is adjusted, the spatial coverage area of the satellite beam changes.

In NTN communication, due to reasons such as limited satellite power and an excessively long distance between a terminal device and a satellite, a link budget is limited. To be specific, a signal-to-noise ratio of a signal received by the terminal device is low, or even demodulation cannot be performed. Especially when the terminal device is in an RRC idle state, a user usually places the terminal device in a pocket or a file bag. In this case, the link budget further deteriorates. If an access network device needs to page the terminal device, the terminal device may fail to correctly receive a paging message, and therefore miss paging. Therefore, how to ensure a link budget of a paging channel so as to increase a paging success rate becomes an urgent problem to be resolved currently.

In view of this, this application provides a communication method, to help increase the paging success rate.

The following describes in detail the communication method and a communication apparatus provided in this application.

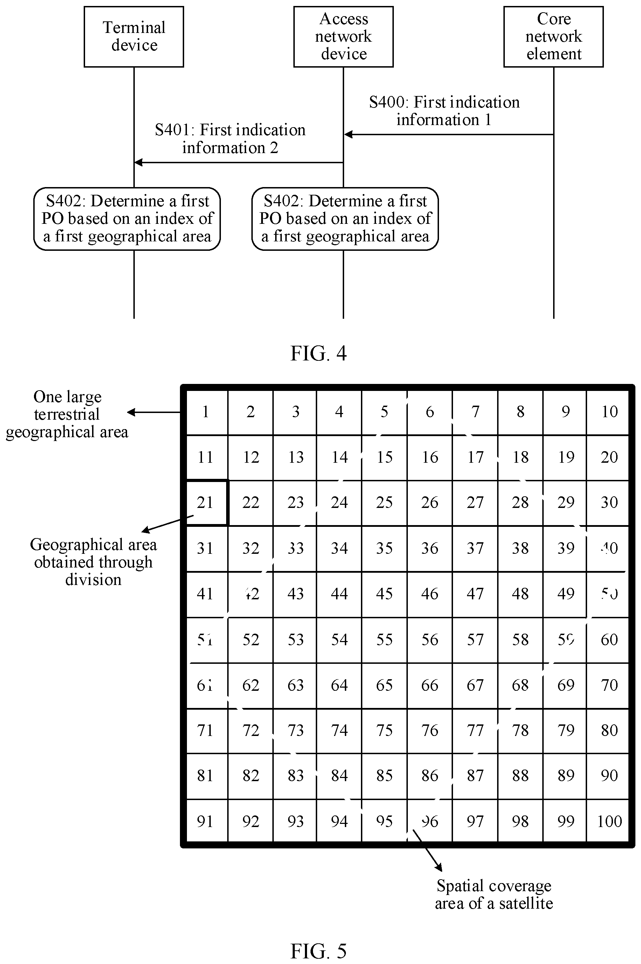

FIG. 4 is a schematic interaction flowchart of a communication method according to an embodiment of this application. As shown in FIG. 4, the communication method includes the following steps S400 to S402. The method shown in FIG. 4 may be performed by a terminal device, an access network device (for example, a satellite), and a core network element (for example, an AMF). Alternatively, the method shown in FIG. 4 may be performed by a chip in the terminal device, a chip in the access network device, and a chip in the core network element. For ease of description, FIG. 4 is mainly described by using an example in which the method is performed by the terminal device, the access network device, and the core network element. It should be noted that a device configured to perform a function of the core network element in this application may alternatively be an OAM, a third-party control center, or the like. This is not limited in this application. It should be noted that FIG. 4 is a schematic flowchart of a method embodiment of this application, and shows detailed communication steps or operations of the method. However, these steps or operations are merely examples. Other operations or variants of various operations in FIG. 4 may be further performed in embodiments of this application. In addition, the steps in FIG. 4 may be separately performed in a sequence different from that shown in FIG. 4, and possibly, not all operations in FIG. 4 need to be performed.

S400: The core network element sends first indication information 1 to the access network device. Correspondingly, the access network device receives the first indication information 1 from the core network element.

In some possible implementations, the first indication information 1 indicates an index of a first geographical area to which first location information belongs, and the first location information is location information of the terminal device. Herein, the location information of the terminal device may be specifically location coordinate values of the terminal device. The location coordinate values may be coordinate values (x, y, z) in an earth-centered earth-fixed rectangular coordinate system (earth-centered earth-fixed, ECEF), or may be represented by longitude and latitude coordinates, or a method such as a location relationship coordinate relative to a satellite may be used for representation. This is not limited in this application.

In a possible implementation, the location information of the terminal device may be actively reported by the terminal device. For example, the terminal device sends the location information of the terminal device to the access network device, and the access network device sends the location information of the terminal device to the core network element. It should be understood that the access network device may directly forward the location information of the terminal device, or the access network device may perform fuzzy processing or truncation processing on the location information of the terminal device, and then send the location information of the terminal device to the core network element. This is not limited in this application.

Optionally, in another possible implementation, the location information of the terminal device may alternatively be obtained through positioning by the access network device, and the access network device sends the location information of the positioned terminal device to the core network element. For example, the access network device may estimate the location information of the terminal device based on an uplink signal sent by the terminal device. For example, the terminal device may send a preamble to the access network device, and the access network device estimates an included angle between the terminal device and the access network device based on phase differences obtained when different antennas receive the preamble, to estimate a location of the terminal device. For another example, the access network device may alternatively estimate the location information of the terminal device based on a delay of round-trip transmission between the terminal device and the access network device, and the like. This is not limited in this application.

In embodiments of this application, the following mainly uses an example in which the terminal device reports the location information for description. Therefore, after the access network device obtains current location information (that is, the first location information) of the terminal device, the access network device may further send the obtained first location information to the core network element, so that the core network element determines, based on the obtained first location information, a geographical area to which the terminal device specifically belongs. In this embodiment of this application, the determined geographical area to which the terminal device belongs is referred to as the first geographical area. The first geographical area corresponds to an index, which is referred to as the index of the first geographical area. After the index of the first geographical area is determined, the core network element may send, to the access network device, the first indication information 1 indicating the index of the first geographical area.

It should be noted that the geographical area in this embodiment of this application is static relative to the earth. Generally, a plurality of geographical areas may be obtained by dividing one large terrestrial geographical area. Each geographical area represents a continuous terrestrial geographical area defined by a geometric shape, for example, a square, a rectangle, a quadrilateral, or a general polygon. In an implementation, one large terrestrial geographical area may be divided into geographical areas of a same size. Optionally, in another implementation, one large terrestrial geographical area may be alternatively divided into geographical areas of different sizes. This is not limited in this application. For example, various attributes may be used for representing the geographical area. For example, a boundary box of longitude and latitude coordinates is used for representing the geographical area. For another example, an identifier (or referred to as an index) of the geographical area, a name of the geographical area, and a descriptor of a boundary of the geographical area may be used for representing the geographical area. For ease of understanding, in this application, an example in which the index (namely, an area index) of the geographical area represents the geographical area is mainly used for description. It should be understood that in this application, one geographical area corresponds to one area index, but one area index may correspond to a plurality of geographical areas. A correspondence between the geographical area and the area index may be predefined in a protocol, or may be configured by the core network element. This is not limited in this application.

For example, FIG. 5 is a diagram of geographical area division according to an embodiment of this application. As shown in FIG. 5, one large terrestrial geographical area may be divided into 100 geographical areas of a same size, which are respectively geographical areas whose indexes are 1 to 100. The core network element may perform matching on the location information of the terminal device with the geographical areas, to determine a geographical area to which the location of the terminal device belongs (or referred to as a geographical area in which the terminal device is located), and notify, via the access network device, the terminal device of the index of the geographical area to which the terminal device belongs.

It should be noted that, in this embodiment of this application, the area size of the geographical area obtained through division is related to a spatial coverage area of a transmit beam of the access network device. Usually, the area size of the geographical area obtained through division may be equal to the spatial coverage area of the transmit beam. Optionally, an area size difference between the area size of the geographical area obtained through division and the spatial coverage area of the transmit beam may be less than or equal to a preset area size difference. This is not limited in this application.

S401: The access network device sends first indication information 2 to the terminal device. Correspondingly, the terminal device receives the first indication information 2 from the access network device.

In some feasible implementations, after the access network device receives the first indication information 1 of the core network element, the access network device may include the first indication information 1 in the first indication information 2 and send the first indication information 2 to the terminal device, to notify the terminal device of the index of the geographical area to which the terminal device belongs.

Optionally, in addition to the first indication information 1, the first indication information 2 may further include a first offset and/or a second offset corresponding to the terminal device. The first offset and/or the second offset are/is described in detail below, and details are not described herein.

S402: The access network device/terminal device determines a first PO based on the index of the first geographical area.

In some feasible implementations, to keep an understanding of the PO consistent between the access network device and the terminal device, both the access network device and the terminal device may determine the first PO based on the index of the first geographical area. It may be understood that, because a manner in which the terminal device determines the first PO is the same as a manner in which the access network device determines the first PO, for ease of description, the terminal device is mainly used as an execution body for description in the following. The manner in which the access network device determines the first PO based on the index of the first geographical area is the same as that of the terminal device, and details are not described below.

That the terminal device determines the first PO based on the index of the first geographical area may be understood as: The terminal device determines the first PO based on the index of the first geographical area and one or more of the following: a paging cycle, a quantity of paging frames included in the paging cycle, a quantity of POs included in the paging frame, or an offset used for determining the paging frame. For example, a paging frame in which the first PO is located may satisfy:

$$(SFN+PF\_offset) \bmod T=(T \text{ div } N)*(Area \text{ Index} \bmod N),$$

where
SFN is a system frame number of the paging frame in which the first PO is located, PF_offset is the offset used for determining the paging frame, T is the paging cycle, N is the quantity of paging frames included in the paging cycle, and Area Index is the index of the first geographical area.

Further, a PO index of the first PO may satisfy:

$$i\_s=floor \text{ } (Area\_index/N) \bmod Ns,$$

where
i_s is the PO index of the first PO, Area Index is the index of the first geographical area, N is the quantity of paging frames included in the paging cycle, and Ns is the quantity of POs included in the paging frame.

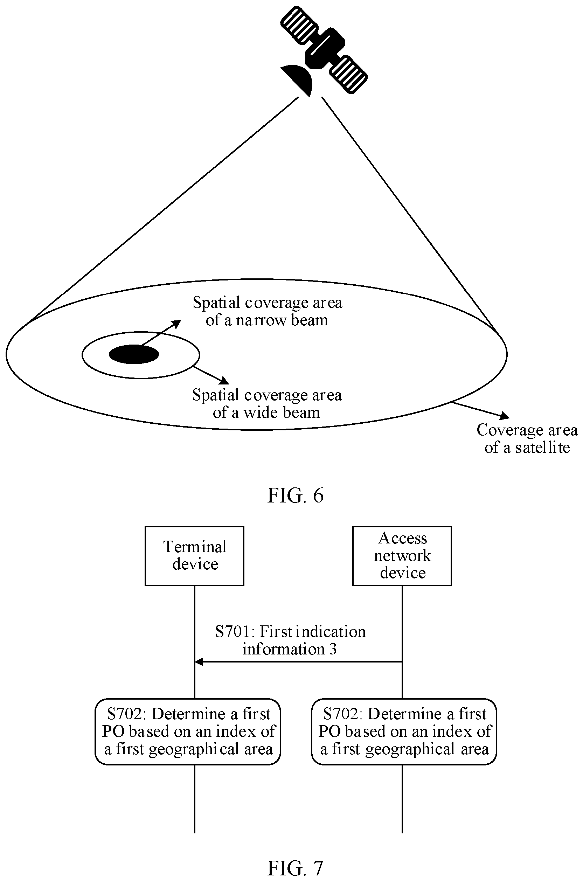

It should be understood that, in this embodiment of this application, the spatial coverage area of the transmit beam used by the access network device for paging is smaller than a spatial coverage area of a synchronization signal block (synchronization signal block, SSB) beam. For ease of description, in this application, the transmit beam used during paging of the access network device may be described as a narrow beam, and the SSB beam may be described as a wide beam in the following. For example, FIG. 6 is a diagram of a wide beam and a narrow beam according to an embodiment of this application. As shown in FIG. 6, a spatial coverage area of the narrow beam is smaller than a spatial coverage area of the wide beam (or referred to as that the spatial coverage area of the narrow beam is a subset of the spatial coverage area of the wide beam).

It should be noted that, in this embodiment of this application, one area index may correspond to/indicate one narrow beam, one area index may correspond to/indicate a plurality of narrow beams, or a plurality of area indexes may correspond to/indicate one narrow beam.

When one area index corresponds to/indicates a plurality of narrow beams, if the plurality of narrow beams are transmit beams of a same access network device, POs of the plurality of narrow beams may be the same. Therefore, the access network device needs to perform paging on the plurality of narrow beams simultaneously. In this case, there is a high capability requirement on the access network device (for example, the access network device needs to have a space division capability). If the access network device does not have the space division capability, a solution in which one area index corresponds to/indicates a plurality of narrow beams cannot be used. When one area index corresponds to/indicates a plurality of narrow beams, if the plurality of narrow beams are transmit beams of a plurality of access network devices respectively, the space division capability of the access network device does not need to be required.

When a plurality of area indexes correspond to/indicate one narrow beam, POs of different terminal devices in a same narrow beam may be different, and paging needs to be performed on a plurality of POs in the same narrow beam. When there is a small quantity of terminal devices, additional paging overheads may be caused.

It should be noted that when one area index corresponds to/indicates one narrow beam of an access network device, paging occasions that are of different terminal devices in one narrow beam and that are calculated based on the foregoing formula are the same. In a densely populated geographical area, because there is an excessive quantity of terminal devices, paging may not be performed simultaneously. Therefore, it is proposed in this embodiment of this application that terminal devices in a geographical area may be further regrouped to distinguish between terminal devices in a coverage area of a same narrow beam. The following separately describes different grouping manners.

In a possible implementation 1, the first indication information 2 may further indicate the first offset corresponding to the terminal device, and the first offset is used for determining the paging frame corresponding to the terminal device. In other words, the access network device may further allocate user-level PF_offset to the terminal device. For ease of description, UE_specific_PF_offset may be used below to represent the first offset, so that terminal devices in one narrow beam can be distinguished. Therefore, the paging frame in which the first PO is located may satisfy:

$$(SFN+UE\_specific\_PF\_offset) \bmod T=(T \bmod N)*(Area\ Index \bmod N),$$

where

SFN is the system frame number of the paging frame in which the first PO is located, UE_specific_PF_offset is the first offset, T is the paging cycle, N is the quantity of paging frames included in the paging cycle, and Area Index is the index of the first geographical area.

Further, the PO index of the first PO may satisfy:

$$i\_s=floor\ (Area\_index/N) \bmod Ns,$$

where

i_s is the PO index of the first PO, Area Index is the index of the first geographical area, N is the quantity of paging frames included in the paging cycle, and Ns is the quantity of POs included in the paging frame.

It should be noted that when the foregoing implementation 1 is used, for terminal devices to which different UE_specific_PF_offset is allocated, paging frames corresponding to the terminal devices are different, but PO locations of POs that are of the terminal devices and that are in different paging frames are the same. For example, assuming that there are 100 terminal devices in a geographical area 1, which are respectively a UE 1 to a UE 100, the access network device may configure first offsets corresponding to the UE 1 to the UE 50 as a first offset 1, and configure first offsets corresponding to the UE 51 to the UE 100 as a first offset 2. Based on this, the terminal devices in the geographical area 1 can be divided into two groups, where the UE 1 to the UE 50 are in a group 1, and different UEs in the group 1 have a same paging occasion; and the UE 51 to the UE 100 are in a group 2, and different UEs in the group 2 have a same paging occasion. It may be understood that a paging frame corresponding to the group 1 is different from a paging frame corresponding to the group 2, but a PO index of the group 1 is the same as a PO index of the group 2. In other words, paging occasions of the group 1 and the group 2 are located at same PO locations in different paging frames.

It should be noted that "the same paging occasion (or paging occasions are the same)" mentioned in embodiments of this application means that paging frames are the same, and PO locations in the paging frames are the same.

Optionally, the first offset may not be indicated by the first indication information 2. To be specific, the access network device does not allocate/configure the first offset when delivering the index of the first geographical area, but the terminal device determines the first offset based on a UE_specific_PF_offset list broadcast by the access network device and UE_ID of the terminal device. For example, it is assumed that the UE_specific_PF_offset list broadcast by the access network device includes two UE_specific_PF_offset, which are respectively UE_specific_PF_offset 1 and UE_specific_PF_offset 1. The terminal device determines, based on UE_ID of the terminal device, which UE_specific_PF_offset is to be selected from the UE_specific_PF_offset list. For example, a selection rule may be: If UE_ID mod 2=0, UE_specific_PF_offset 1 is used; or if UE_ID mod 2=1, UE_specific_PF_offset 2 is used. In this manner, locations of PFs corresponding to different terminal devices in a same narrow beam can be more flexibly configured.

In a possible implementation 2, the first indication information 2 may further indicate the second offset corresponding to the terminal device, and the second offset is used for determining the paging occasion corresponding to the terminal device. In other words, the access network device may further allocate user-level PO_offset to the terminal device. For ease of description, UE_specific_PO_offset may be used below to represent the second offset, so that terminal devices in one narrow beam can alternatively be distinguished. Therefore, the paging frame in which the first PO is located may satisfy:

$$(\text{SFN}+\text{PF\_offset}) \bmod T=(T \operatorname{div} N)*(\text{Area Index} \bmod N),$$

where

SFN is the system frame number of the paging frame in which the first PO is located, PF_offset is the offset used for determining the paging frame, T is the paging cycle, N is the quantity of paging frames included in the paging cycle, and Area Index is the index of the first geographical area.

Further, the PO index of the first PO may satisfy:

$$(\text{i\_s}+\text{UE\_specific\_PO\_offset})=\text{floor}\,(\text{Area\_index}/N) \bmod \text{Ns},$$

where

i_s is the PO index of the first PO, UE_specific_PO_offset is the second offset, Area Index is the index of the first geographical area, N is the quantity of paging frames included in the paging cycle, and Ns is the quantity of POs included in the paging frame.

It should be noted that when the foregoing implementation 2 is used, for terminal devices to which different UE_specific_PO_offset is allocated, paging frames corresponding to different terminal devices are the same, but PO indexes of POs that are of different terminal devices and that are in the paging frames are different. For example, assuming that there are 100 terminal devices in a geographical area 1, which are respectively a UE 1 to a UE 100, the access network device may configure second offsets corresponding to the UE 1 to the UE 50 as a second offset 1, and configure second offsets corresponding to the UE 51 to the UE 100 as a second offset 2. Based on this, the terminal devices in the geographical area 1 can be divided into two groups, where the UE 1 to the UE 50 are in a group 1, and different UEs in the group 1 have a same paging occasion; and the UE 51 to the UE 100 are in a group 2, and different UEs in the group 2 have a same paging occasion. It may be understood that a paging frame corresponding to the group 1 is the same as a paging frame corresponding to the group 2, but a PO index of the group 1 is different from a PO index of the group 2. In other words, paging occasions of the group 1 and the group 2 are located at different PO locations in a same paging frame.

Optionally, the second offset may not be indicated by the first indication information 2. To be specific, the access network device does not allocate/configure the second offset when delivering the index of the first geographical area, but the terminal device determines the second offset based on a UE_specific_PO_offset list broadcast by the access network device and UE_ID of the terminal device. For example, it is assumed that the UE_specific_PO_offset list broadcast by the access network device includes two UE_specific_PO_offset, which are respectively UE_specific_PO_offset 1 and UE_specific_PO_offset 1. The terminal device determines, based on UE_ID of the terminal device, which UE_specific_PO_offset is to be selected from the UE_specific_PO_offset list. For example, a selection rule may be: If UE_ID mod 2=0, UE_specific_PO_offset 1 is used; or if UE_ID mod 2=1, UE_specific_PO_offset 2 is used. In this manner, locations of POs corresponding to different terminal devices in a same narrow beam can be more flexibly configured.

In a possible implementation 3, the first indication information 2 may further indicate the first offset and the second offset corresponding to the terminal device. In other words, the access network device may allocate both user-level PF_offset and user-level PO_offset to the terminal device, so that terminal devices in one narrow beam can alternatively be distinguished. Therefore, the paging frame in which the first PO is located may satisfy:

$$(\text{SFN}+\text{UE\_specific\_PF\_offset}) \bmod T=(T \operatorname{div} N)*(\text{Area Index} \bmod N),$$

where

SFN is the system frame number of the paging frame in which the first PO is located, UE_specific_PF_offset is the first offset, T is the paging cycle, N is the quantity of paging frames included in the paging cycle, and Area Index is the index of the first geographical area.

Further, the PO index of the first PO may satisfy:

$$(\text{i\_s}+\text{UE\_specific\_PO\_offset})=\text{floor}\,(\text{Area\_index}/N) \bmod \text{Ns},$$

where

i_s is the PO index of the first PO, UE_specific_PO_offset is the second offset, Area Index is the index of the first geographical area, N is the quantity of paging frames included in the paging cycle, and Ns is the quantity of POs included in the paging frame.

It should be noted that when the foregoing implementation 3 is used, for terminal devices to which different UE_specific_PF_offset and UE_specific_PO_offset are allocated, paging frames corresponding to the terminal devices are different, and PO indexes of POs in the paging frames are also different. For example, assuming that there are 100 terminal devices in a geographical area 1, which are respectively a UE 1 to a UE 100, the access network device may configure first offsets and second offsets that correspond to the UE 1 to the UE 50 as a first offset 1 and a second offset 1 respectively, and configure first offsets and second offsets that correspond to the UE 51 to the UE 100 as a first offset 2 and a second offset 2 respectively. Based on this, the terminal devices in the geographical area 1 can be divided into two groups, where the UE 1 to the UE 50 are in a group 1, and different UEs in the group 1 have a same paging occasion; and the UE 51 to the UE 100 are in a group 2, and different UEs in the group 2 have a same paging occasion. It may be understood that a paging frame corresponding to the group 1 is different from a paging frame corresponding to the group 2, and a PO index of the group 1 is also different from a PO index of the group 2. In other words, paging occasions of the group 1 and the group 2 are located at different PO locations in different paging frames.

It should be noted that, in this embodiment of this application, user-level PF_offset (that is, UE_specific_PF_offset) and user-level PO_offset (that is, UE_specific_PO_offset) may be different PF_offset and/or PO_offset configured for different terminal devices, or different PF_offset and/or PO_offset configured for different user groups.

In a possible implementation 4, paging occasions in a same narrow beam may be further bound to UE_ID (that is, calculation of the PO is related to both Area index and UE_ID), to further distinguish between paging occasions corresponding to different terminal devices in the same narrow beam.

In an example 1, the access network device may configure a new parameter beam_specific_N1 for different terminal devices. beam_specific_N1 indicates a quantity of paging frames included in one beam in the paging cycle (that is, beam_specific_N1 is a beam-level configuration). Therefore, the paging frame in which the first PO is located may satisfy:

$$(SFN+PF\_offset+(UE\_ID \bmod beam\_specific\_N1)*PF\_offset) \bmod T=(T \text{ div } N)*(Area\ Index \bmod N),$$

where SFN is the system frame number of the paging frame in which the first PO is located, PF_offset is the offset used for determining the paging frame, UE_ID is an identifier of the terminal device, beam_specific_N1 is the quantity of paging frames included in one beam, T is the paging cycle, N is the quantity of paging frames included in the paging cycle, and Area Index is the index of the first geographical area.

Further, the PO index of the first PO may satisfy:

$$i\_s=floor\ (Area\_index/N) \bmod Ns,$$

where
i_s is the PO index of the first PO, Area Index is the index of the first geographical area, N is the quantity of paging frames included in the paging cycle, and Ns is the quantity of POs included in the paging frame.

It can be learned from the example 1 that, in this case, paging frames for different UE_ID may be configured in a staggered manner. Similar to the implementation 1, for terminal devices to which different beam_specific_N1 is allocated, paging frames corresponding to the terminal devices are different, but PO locations of POs that are of the terminal devices and that are in different paging frames are the same.

It should be noted that in the example 1, when PF_offset is configured as 0, different terminal device groups in the beam have a same PO. Based on this, in an example 2, another paging frame calculation formula is provided. That is, the paging frame in which the first PO is located may satisfy:

$$(SFN+PF\_offset+(UE\_ID \bmod beam\_specific\_N1)*delta\_PF\_offset) \bmod T=(T \text{ div } N)*(Area\ Index \bmod N),$$

where SFN is the system frame number of the paging frame in which the first PO is located, PF_offset is the offset used for determining the paging frame, UE_ID is the identifier of the terminal device, beam_specific_N1 is the quantity of paging frames included in one beam, delta_PF_offset is a cell-level or beam-level offset configuration, T is the paging cycle, N is the quantity of paging frames included in the paging cycle, and Area Index is the index of the first geographical area.

Further, the PO index of the first PO may satisfy:

$$i\_s=floor\ (Area\_index/N) \bmod Ns,$$

where

i_s is the PO index of the first PO, Area Index is the index of the first geographical area, N is the quantity of paging frames included in the paging cycle, and Ns is the quantity of POs included in the paging frame.

It can be learned from the example 2 that, with configuration of delta_PF_offset (which may be the cell-level configuration or may be the beam-level configuration), different terminal device groups may have different paging frame locations. The example 2 is also similar to the implementation 1. For terminal devices to which different beam_specific_N1 and delta_PF_offset are allocated, paging frames corresponding to the terminal devices are different, but PO locations of POs that are of the terminal devices and that are in different paging frames are the same.

Optionally, similar to the example 1 and the example 2, beam-level beam_specific_N1 or cell-level or beam-level delta_PO_offset may be configured for the PO index of the first PO, so that different terminal device groups have different PO indexes.

It should be noted that, because each narrow beam includes at least one PO in one paging cycle, time resource overheads may be excessively high when there is a large quantity of narrow beams (this is because a paging occasion needs to be reserved for each narrow beam). Considering that in NTN communication, different terminal devices may be scheduled simultaneously by using a space division beam (that is, different terminal devices have a same time-frequency resource, and different terminal devices are distinguished by using space division), it may also be designed that POs of a plurality of narrow beams are the same (that is, one area index corresponds to/indicates a plurality of narrow beams), and these narrow beams with same POs need to be separated by a specific distance to avoid mutual interference. For ease of understanding, for example, it is designed that POs of two narrow beams are the same. As shown in FIG. 5, assuming that there are 100 area indexes, 50 paging occasions may be designed, so that paging occasions of the 100 area indexes are the same in pairs. For example, paging occasions of an area index 16 and an area index 66 are the same. Therefore, the access network device may simultaneously perform paging on the two narrow beams. If the access network device does not have a space division capability, or power needs to be completely aggregated to a same beam, a solution in which it is designed that POs of a plurality of narrow beams are the same cannot be used.

It should be noted that after the terminal device moves for a specific distance, the terminal device needs to re-report location information of the terminal device (or the terminal device may periodically report location information of the terminal device). Therefore, the access network device may determine, based on the location information reported by the terminal device, whether to re-allocate an area index to the terminal device, to ensure that a user can be correctly paged. It should be noted that the access network device alternatively determines the first PO based on the index of the first geographical area to which the location information of the terminal device belongs, and then performs paging on the terminal device on the first PO by using a beam (for example, the first beam) corresponding to the first geographical area. Correspondingly, the terminal device does not sense a manner in which the access network device specifically divides the geographical area, and only needs to calculate the first PO based on the index that is of the first geographical area and that is delivered by the access network device, and monitor a paging message on the first PO.

It should be noted that a wide beam paging solution is used in a conventional technology, and an SSB index is associated with a paging occasion (that is, there is a correspondence/association relationship between the SSB index and the paging occasion). Therefore, the terminal device needs to find a corresponding PO based on an SSB in which the terminal device is located, and then performs paging on the determined PO by using a wide beam. However, a signal-to-noise ratio of the wide beam is low. Therefore, this application proposes a narrow beam paging solution, and in this application, the PO corresponding to the terminal device is no longer determined based on the SSB in which the terminal device is located and the association relationship between the SSB index and the paging occasion, but a correspondence between the index of the geographical area and the paging occasion is established. In this way, a network side can perform paging on the terminal device by using a narrow beam (that is, a beam narrower than an SSB beam), thereby improving a link budget and helping increase a paging success rate.

FIG. 7 is another schematic interaction flowchart of a communication method according to an embodiment of this application. As shown in FIG. 7, the communication method includes the following steps S701 and S702. The method shown in FIG. 7 may be performed by a terminal device and an access network device, or the method shown in FIG. 7 may be performed by a chip in the terminal device and a chip in the access network device. For ease of description, FIG. 7 is mainly described by using an example in which the method is performed by the terminal device and the access network device. It should be noted that FIG. 7 is a schematic flowchart of a method embodiment of this application, and shows detailed communication steps or operations of the method. However, these steps or operations are merely examples. Other operations or variants of various operations in FIG. 7 may be further performed in embodiments of this application. In addition, the steps in FIG. 7 may be separately performed in a sequence different from that shown in FIG. 7, and possibly, not all operations in FIG. 7 need to be performed.

S701: The access network device sends first indication information 3 to the terminal device. Correspondingly, the terminal device receives the first indication information 3 from the access network device.

In some possible implementations, the first indication information 3 indicates an index of a first geographical area to which first location information belongs, and the first location information is location information of the terminal device.

Herein, the location information of the terminal device may be specifically location coordinate values of the terminal device. The location coordinate values may be coordinate values (x, y, z) in ECEF, or may be represented by longitude and latitude coordinates, or a method such as a location relationship coordinate relative to a satellite may be used for representation. This is not limited in this application.

In a possible implementation, the location information of the terminal device may be actively reported by the terminal device. Optionally, in another possible implementation, the location information of the terminal device may alternatively be obtained through positioning by the access network device. For a specific positioning manner, refer to the related descriptions of S401. Details are not described herein again.

It should be understood that, in this embodiment, a core network element, a network manager, or a third-party control center may pre-divide a geographical area and a correspondence between the geographical area and an area index, and send the correspondence to the access network device, so that the access network device may determine, based on the obtained first location information and the correspondence, the index of the first geographical area to which the location information of the terminal device belongs, and send, to the terminal device, the first indication information 3 indicating the index of the first geographical area.

Optionally, when geographical area division and/or the correspondence between the geographical area and the area index are/is updated/changed, the core network element, the network manager, or the third-party control center needs to synchronize updated information to the access network device.

S702: The access network device/terminal device determines a first PO based on the index of the first geographical area.

Herein, an understanding of step S702 is similar to that of step S402. A difference lies in that first indication information in step S402 is the first indication information 2, and first indication information in step S702 is the first indication information 3.

Optionally, in some feasible implementations, the correspondence between the geographical area and the area index may be directly sent to the terminal device, and stored in the terminal device. Therefore, the terminal device may determine, without interacting with a network side, a first physical area to which the terminal device belongs and an index of the first physical area based on the location information of the terminal device, and then determine the first PO based on the index of the first geographical area.

This embodiment of this application is similar to the embodiment shown in FIG. 4, and a difference lies in that the access network device allocates the index of the geographical area to the terminal device.

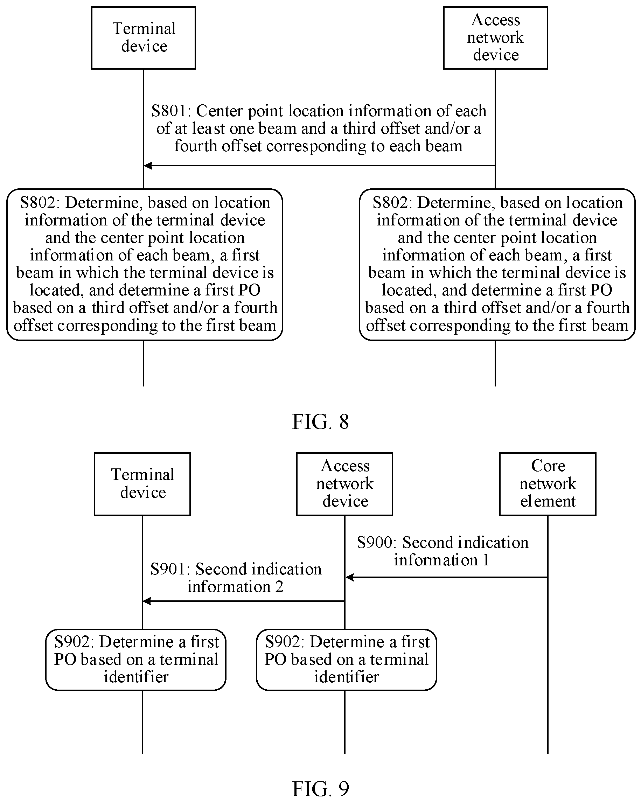

FIG. 8 is still another schematic interaction flowchart of a communication method according to an embodiment of this application. As shown in FIG. 8, the communication method includes the following steps S801 and S802. The method shown in FIG. 8 may be performed by a terminal device and an access network device, or the method shown in FIG. 8 may be performed by a chip in the terminal device and a chip in the access network device. For ease of description, FIG. 8 is mainly described by using an example in which the method is performed by the terminal device and the access network device. It should be noted that FIG. 8 is a schematic flowchart of a method embodiment of this application, and shows detailed communication steps or operations of the method. However, these steps or operations are merely examples. Other operations or variants of various operations in FIG. 8 may be further performed in embodiments of this application. In addition, the steps in FIG. 8 may be separately performed in a sequence different from that shown in FIG. 8, and possibly, not all operations in FIG. 8 need to be performed.

S801: The access network device sends center point location information of each of at least one beam and a third offset and/or a fourth offset corresponding to each beam. Correspondingly, the terminal device receives the center point location information of each of the at least one beam and the third offset and/or the fourth offset corresponding to each beam.

The third offset is used for determining a paging frame corresponding to the beam. In other words, the third offset is beam-level PF_offset. For ease of description, the third offset may be represented by beam_specific_PF_offset below. The fourth offset is used for determining a paging occasion corresponding to the beam. In other words, the fourth offset is beam-level PO_offset. For ease of description, the fourth offset may be represented by beam_specific_PO_offset below. It should be noted that in this application, a spatial coverage area of the beam is smaller than a spatial coverage area of an SSB beam. That is, in this application, a transmit beam used for paging is a narrow beam, and correspondingly, the SSB beam is a wide beam.

S802: The access network device/terminal device determines, based on location information of the terminal device and the center point location information of each beam, a first beam in which the terminal device is located, and determines a first PO based on a third offset and/or a fourth offset corresponding to the first beam.

It should be understood that the first beam is included in the at least one beam. It should be noted that, to keep an understanding of the PO consistent between the access network device and the terminal device, both the access network device and the terminal device may determine the first PO based on the third offset and/or the fourth offset corresponding to the first beam. It may be understood that, because a manner in which the terminal device determines the first PO is the same as a manner in which the access network device determines the first PO, for ease of description, the terminal device is mainly used as an execution body for description in the following. The manner in which the access network device determines the first PO based on the third offset and/or the fourth offset corresponding to the first beam is the same as that of the terminal device, and details are not described below.

It should be understood that the center point location information of the beam may be understood as an intersection point, on the ground surface, of a line connecting a vertex direction of a main lobe (a beam vertex direction) of a radiation array pattern and the center of the Earth. For example, the center point location information of the beam may be indicated by coordinates (x, y, z) of an earth-centered earth-fixed rectangular coordinate system (earth-centered earth-fixed, ECEF), or may be indicated by longitude and latitude coordinates, or a method such as a location relationship coordinate relative to a satellite may be used for indication. This is not limited in this application.

That the terminal device determines, based on the location information of the terminal device and the center point location information of each beam, the first beam in which the terminal device is located may be understood as: The terminal device may calculate a distance between the location information of the terminal device and the center point location information of each beam, to determine the beam in which the terminal device is located (for ease of description, the beam in which the terminal device is located is subsequently referred to as the first beam), and then determine the first PO based on the third offset and/or the fourth offset corresponding to the first beam. Specifically, that the terminal device determines the first PO based on the third offset and/or the fourth offset corresponding to the first beam may be understood as: The terminal device determines the first PO based on the third offset and/or the fourth offset corresponding to the first beam, and one or more of the following: a paging cycle, a quantity of paging frames included in the paging cycle, a quantity of POs included in the paging frame, or a group index of the terminal device.

It should be noted that when the access network device determines, based on the location information of the terminal device and the center point location information of each beam, the first beam in which the terminal device is located, the location information that is of the terminal device and that is used by the access network device may be actively reported by the terminal device, or may be obtained through positioning by the access network device. This is not limited in this application.

In a possible implementation (1), when the access network device configures only the third offset corresponding to the first beam for the terminal device, a paging frame in which the first PO is located satisfies:

$$(\text{SFN}+\text{beam\_specific\_PF\_offset}) \bmod T=(T \text{ div } N)*(\text{UE\_ID} \bmod N),$$

where
SFN is a system frame number of the paging frame in which the first PO is located, beam_specific_PF_offset is the third offset corresponding to the first beam, T is the paging cycle, N is the quantity of paging frames included in the paging cycle, and UE_ID is an identifier of the terminal device.

Further, a PO index of the first PO may satisfy:

$$i\_s=\text{floor}(\text{UE\_ID}/N) \bmod Ns,$$

where
i_s is the PO index of the first PO, UE_ID is the identifier of the terminal device, N is the quantity of paging frames included in the paging cycle, and Ns is the quantity of POs included in the paging frame.

It may be understood that, in the implementation (1), paging frames corresponding to terminal devices located in different beams are different, but PO locations of POs that are of the terminal devices and that are in different paging frames are the same.

In a possible implementation (2), when the access network device configures only the fourth offset corresponding to the first beam for the terminal device, a paging frame in which the first PO is located satisfies:

$$(\text{SFN}+\text{PF\_offset}) \bmod T=(T \text{ div } N)*(\text{UE\_ID} \bmod N),$$

where
SFN is a system frame number of the paging frame in which the first PO is located, PF_offset is an offset used for determining a paging frame, T is the paging cycle, N is the quantity of paging frames included in the paging cycle, and UE_ID is an identifier of the terminal device.

Further, a PO index of the first PO may satisfy:

$$(i\_s+\text{beam\_specific\_PO\_offset})=\text{floor }(\text{UE\_ID}/N) \bmod Ns,$$

where

i_s is the PO index of the first PO, beam_specific_PO_offset is the fourth offset corresponding to the first beam, UE_ID is the identifier of the terminal device, N is the quantity of paging frames included in the paging cycle, and Ns is the quantity of POs included in the paging frame.

It may be understood that, in the implementation (2), paging frames corresponding to terminal devices located in different beams are the same, but PO locations of POs that are of the terminal devices and that are in a same paging frame are different.

In a possible implementation (3), when the access network device configures both the third offset and the fourth offset corresponding to the first beam for the terminal device, a paging frame in which the first PO is located satisfies:

$$(\text{SFN}+\text{beam\_specific\_PF\_offset}) \bmod T=(T \bmod N)*(\text{UE\_ID} \bmod N),$$

where

SFN is a system frame number of the paging frame in which the first PO is located, beam_specific_PF_offset is the third offset corresponding to the first beam, T is the paging cycle, N is the quantity of paging frames included in the paging cycle, and UE_ID is an identifier of the terminal device.

Further, a PO index of the first PO satisfies:

$$(\text{i\_s}+\text{beam\_specific\_PO\_offset})=\text{floor }(\text{UE\_ID}/N) \bmod Ns,$$

where

i_s is the PO index of the first PO, beam_specific_PO_offset is the fourth offset corresponding to the first beam, UE_ID is the identifier of the terminal device, N is the quantity of paging frames included in the paging cycle, and Ns is the quantity of POs included in the paging frame.

It may be understood that, in the implementation (3), paging frames corresponding to terminal devices located in different beams are different, and PO locations in the paging frames are also different.

It should be noted that the access network device alternatively determines, based on the obtained location information of the terminal device, a beam (namely, the first beam) in which the terminal device is located, determines the first PO based on the third offset and/or the fourth offset corresponding to the first beam, and performs paging on the terminal device on the first PO by using the first beam. Correspondingly, after determining the first PO based on the third offset and/or the fourth offset corresponding to the first beam, the terminal device may monitor a paging message on the first PO.

In this embodiment of this application, the center point location information of each narrow beam and PO_offset and/or PF_offset corresponding to the narrow beam are broadcast, so that the terminal device determines the narrow beam in which the terminal device is located and a corresponding PO location, and paging occasions of different narrow beams can be configured in a staggered manner. In this way, an association relationship between an SSB index and a PO in a conventional technology can also be unbound, and the access network device can perform paging on the terminal device by using the narrow beam, thereby improving a link budget and increasing a paging success rate.

FIG. 9 is still another schematic interaction flowchart of a communication method according to an embodiment of this application. As shown in FIG. 9, the communication method includes the following steps S900 to S902. The method shown in FIG. 9 may be performed by a terminal device, an access network device (for example, a satellite), and a core network element (for example, an AMF). Alternatively, the method shown in FIG. 9 may be performed by a chip in the terminal device, a chip in the access network device, and a chip in the core network element. For ease of description, FIG. 9 is mainly described by using an example in which the method is performed by the terminal device, the access network device, and the core network element. It should be noted that a device configured to perform a function of the core network element in this application may alternatively be an OAM, a third-party control center, or the like. This is not limited in this application. It should be noted that FIG. 9 is a schematic flowchart of a method embodiment of this application, and shows detailed communication steps or operations of the method. However, these steps or operations are merely examples. Other operations or variants of various operations in FIG. 9 may be further performed in embodiments of this application. In addition, the steps in FIG. 9 may be separately performed in a sequence different from that shown in FIG. 9, and possibly, not all operations in FIG. 9 need to be performed.

S900: The core network element determines and sends second indication information 1 to the access network device. Correspondingly, the access network device receives the second indication information 1 from the core network element.

The second indication information 1 indicates a terminal identifier allocated to the terminal device, the terminal identifier is determined based on first location information, and the first location information is location information of the terminal device. For example, the location information of the terminal device may be actively reported by the terminal device, or may be obtained through positioning by the access network device. For a specific positioning manner, refer to the related descriptions of S401. Details are not described herein again. The location information of the terminal device may be specifically location coordinate values of the terminal device. The location coordinate values may be coordinate values (x, y, z) in ECEF, or may be represented by longitude and latitude coordinates, or a method such as a location relationship coordinate relative to the satellite may be used for representation. This is not limited in this application.

For example, in this embodiment, the terminal identifier sent by the core network element to the access network device may be a TMSI.

It should be understood that, in this embodiment, a manner of allocating the terminal identifier to the terminal device based on a first physical area to which the terminal device belongs can also ensure that paging occasions in spatial coverage areas of different beams are different.

S901: The access network device sends second indication information 2 to the terminal device. Correspondingly, the terminal device receives the second indication information 2 from the access network device.

In some feasible implementations, the access network device may obtain a 5G-S-TMSI by processing the TMSI allocated by the core network element, and then the access network device may send, to the terminal device, the second indication information 2 indicating the 5G-S-TMSI.

S902: The access network device/terminal device determines a first PO based on the terminal identifier.

It should be noted that, to keep an understanding of the PO consistent between the access network device and the terminal device, both the access network device and the terminal device may determine the first PO based on the 5G-S-TMSI in S902. Because a manner in which the terminal device determines the first PO is the same as a manner in which the access network device determines the first PO, for ease of description, the terminal device is mainly used as an execution body for description in the following. The manner in which the access network device determines the first PO based on the 5G-S-TMSI is the same as that of the terminal device, and details are not described below.

For example, a paging frame in which the first PO is located may satisfy:

$$(\text{SFN}+\text{PF\_offset}) \bmod T=(T \text{ div } N)*(\text{UE\_ID} \bmod N),$$

where
SFN is a system frame number of the paging frame in which the first PO is located, PF_offset is an offset used for determining the paging frame, T is a paging cycle, N is a quantity of paging frames included in the paging cycle, and UE_ID is the identifier of the terminal device determined based on the 5G-S-TMSI. For example, if the terminal device is configured with eDRX, UE_ID=5G-S-TMSI mod 4096; or if the terminal device is not configured with eDRX, UE_ID=5G-S-TMSI mod 1024. The 5G-S-TMSI in this embodiment is determined based on the first location information.

A PO index of the first PO satisfies:

$$i\_s=\text{floor}(\text{UE\_ID}/N) \bmod Ns,$$

where
i_s is the PO index of the first PO, UE_ID is the identifier of the terminal device determined based on the 5G-S-TMSI, N is the quantity of paging frames included in the paging cycle, and Ns is a quantity of POs included in the paging frame.

It should be noted that the access network device alternatively determines the first PO based on the 5G-S-TMSI that is determined based on the first location information, and then performs paging on the terminal device on the first PO by using a beam (for example, a first beam) corresponding to the first geographical area. Correspondingly, the terminal device may monitor a paging message on the determined first PO.

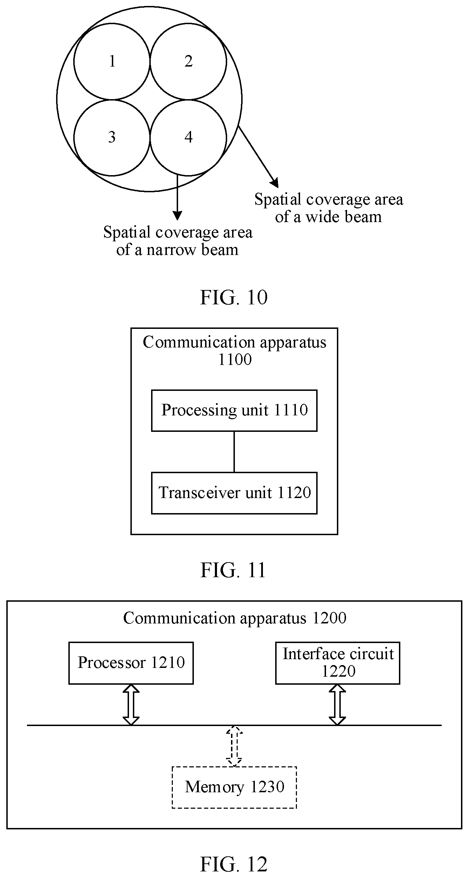

It may be understood that, in this embodiment of this application, all beams used for paging are narrow beams. Usually, a spatial coverage area of one wide beam may include spatial coverage areas of a plurality of narrow beams. For example, FIG. 10 is another diagram of a wide beam and a narrow beam according to an embodiment of this application. As shown in FIG. 10, a spatial coverage area of one wide beam includes spatial coverage areas of four narrow beams. In other words, the spatial coverage area of the narrow beam is smaller than the spatial coverage area of the wide beam (or referred to as that the spatial coverage area of the narrow beam is a subset of the spatial coverage area of the wide beam). It should be understood that, in this embodiment, if the configured 5G-S-TMSI can ensure that values of UE_ID mod N in different narrow beams are different (different herein may be partially different or completely different), values of UE_ID mod N in a same narrow beam are the same (that is, terminal devices in the same narrow beam are not further grouped), or values of UE_ID mod N in a same narrow beam are different (that is, terminal devices in the same narrow beam are further grouped), paging occasions of different narrow beams can be distinguished.

It should be understood that, due to mobility of the terminal device, after the terminal device moves for a specific distance, the terminal device may re-report location information of the terminal device, so that a network side needs to re-allocate a terminal identifier to the terminal device based on the updated location information.

In this embodiment of this application, the network side allocates the 5G-S-TMSI to the terminal device based on the location information of the terminal device, so that POs of different narrow beams can be configured in a staggered manner, and the access network device can perform paging on the terminal device by using the narrow beam, thereby improving a link budget and increasing a paging success rate.

The following describes in detail communication apparatuses provided in this application with reference to FIG. 11 and FIG. 12.

It can be understood that, to implement functions in the foregoing embodiments, the communication apparatus includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 11 and FIG. 12 are diagrams of structures of possible communication apparatuses according to embodiments of this application. These communication apparatuses may be configured to implement functions of the terminal device or the network device (for example, the access network device, the core network element, or the OAM) in the foregoing method embodiments, and therefore can also implement beneficial effects of the foregoing method embodiments. In this embodiment of this application, the communication apparatus may be one of the terminal devices 120a to 120j shown in FIG. 1, or may be the access network device 110a or 110b shown in FIG. 1. Optionally, the communication apparatus may alternatively be a module (for example, a chip) used in the terminal device or the network device.

As shown in FIG. 11, the communication apparatus 1100 includes a processing unit 1110 and a transceiver unit 1120. The communication apparatus 1100 is configured to implement the function of the terminal device or the network device in the method embodiment shown in any one of FIG. 4 to FIG. 11.

When the communication apparatus 1100 is configured to implement the function of the terminal device in the method embodiment shown in any one of FIG. 4 to FIG. 11:

In an implementation:

The transceiver unit 1120 is configured to receive first indication information, where the first indication information indicates an index of a first geographical area to which first location information belongs, and the first location information is location information of a terminal device.

The processing unit 1110 is configured to determine a first paging occasion PO based on the index of the first geographical area.

In another implementation:

The transceiver unit 1120 is configured to receive center point location information of each of at least one beam and a third offset and/or a fourth offset corresponding to each beam, where the third offset is used for determining a paging frame corresponding to the beam, the fourth offset is used for determining a paging occasion corresponding to the beam, and a spatial coverage area of the beam is smaller than a spatial coverage area of a synchronization signal block SSB beam.

The processing unit 1110 is configured to determine, based on location information of a terminal device and the center point location information of each beam, a first beam in which the terminal device is located, where the first beam is included in the at least one beam.

The processing unit 1110 is configured to determine a first paging occasion PO based on a third offset and/or a fourth offset corresponding to the first beam.

When the communication apparatus 1100 is configured to implement the function of the network device in the method embodiment shown in any one of FIG. 4 to FIG. 11:

In an implementation:

The processing unit 1110 is configured to determine second indication information.

The transceiver unit 1120 is configured to send the second indication information, where the second indication information indicates a terminal identifier allocated to a terminal device, the terminal identifier is determined based on first location information, and the first location information is location information of the terminal device.

In another implementation:

The processing unit 1110 is configured to determine first indication information, where the first indication information indicates an index of a first geographical area to which first location information belongs, and the first location information is location information of a terminal device.

The transceiver unit 1120 is configured to send the first indication information.

In still another implementation:

The transceiver unit 1120 is configured to send center point location information of each of at least one beam and a third offset and/or a fourth offset corresponding to each beam, where the third offset is used for determining a paging frame corresponding to the beam, the fourth offset is used for determining a paging occasion corresponding to the beam, and a spatial coverage area of the beam is smaller than a spatial coverage area of a synchronization signal block SSB beam.

The processing unit 1110 is configured to determine, based on location information of a terminal device and the center point location information of each beam, a first beam in which the terminal device is located, where the first beam is included in the at least one beam.

The processing unit 1110 is configured to determine a first paging occasion PO based on a third offset and/or a fourth offset corresponding to the first beam.

For more detailed descriptions of the processing unit 1110 and the transceiver unit 1120, refer to the related descriptions in the method embodiment shown in any one of FIG. 4 to FIG. 11.

As shown in FIG. 12, a communication apparatus 1200 includes a processor 1210 and an interface circuit 1220. The processor 1210 and the interface circuit 1220 are coupled to each other. It can be understood that the interface circuit 1220 may be a transceiver or an input/output interface. Optionally, the communication apparatus 1200 may further include a memory 1230, configured to store instructions executed by the processor 1210, input data needed by the processor 1210 to run instructions, or data generated after the processor 1210 runs instructions.

When the communication apparatus 1200 is configured to implement the method shown in any one of FIG. 4 to FIG. 9, the processor 1210 is configured to implement the functions of the processing unit 1110, and the interface circuit 1220 is configured to implement the functions of the transceiver unit 1120.

When the communication apparatus is a chip used in a terminal device, the chip in the terminal device implements a function of the terminal device in the foregoing method embodiments. The chip in the terminal device receives from another module (for example, a radio frequency module or an antenna) in the terminal device, where the information is sent by an access network device to the terminal device. Alternatively, the chip in the terminal device sends information to another module (for example, a radio frequency module or an antenna) in the terminal device, where the information is sent by the terminal device to an access network device.

When the communication apparatus is a module used in an access network device, the module in the access network device implements a function of the access network device in the foregoing method embodiments. The module in the access network device receives information from another module (for example, a radio frequency module or an antenna) in the access network device, where the information is sent by a terminal device to the access network device. Alternatively, the module in the access network device sends information to another module (for example, a radio frequency module or an antenna) in the access network device, where the information is sent by the access network device to a terminal device. The module in the access network device herein may be a baseband chip in the access network device, may be a CU, a DU, or another module, or may be an apparatus in an open radio access network (open radio access network, O-RAN) architecture, for example, an apparatus like an open CU or an open DU.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in an access network device or a terminal device. The processor and the storage medium may alternatively exist as discrete components in the access network device or the terminal device.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by a computer, or a data storage device such as a server or a data center integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A communication method, comprising:

   receiving first indication information, wherein the first indication information indicates an index of a first geographical area to which first location information belongs, and the first location information is location information of a terminal device; and
   determining a first paging occasion PO based on the index of the first geographical area.

2. The method according to claim 1, wherein the determining the first PO based on the index of the first geographical area comprises:
   determining the first PO based on the index of the first geographical area and one or more of the following: a paging cycle, a quantity of paging frames comprised in the paging cycle, a quantity of POs comprised in the paging frame, or an offset used for determining the paging frame.

3. The method according to claim 2, wherein a paging frame in which the first PO is located satisfies:

$$(SFN+PF\_offset) \bmod T=(T \operatorname{div} N)*(Area\ Index \bmod N),$$

   wherein
   SFN is a system frame number of the paging frame in which the first PO is located, PF_offset is the offset used for determining the paging frame, T is the paging cycle, N is the quantity of paging frames comprised in the paging cycle, and Area Index is the index of the first geographical area.

4. The method according to claim 3, wherein a PO index of the first PO satisfies:

$$i\_s=floor\ (Area\_index/N) \bmod Ns,$$

   wherein
   i_s is the PO index of the first PO, Area Index is the index of the first geographical area, N is the quantity of paging frames comprised in the paging cycle, and Ns is the quantity of POs comprised in the paging frame.

5. The method according to claim 1, wherein the first indication information further indicates a first offset and/or a second offset corresponding to the terminal device, the first offset is used for determining a paging frame corresponding to the terminal device, and the second offset is used for determining a paging occasion corresponding to the terminal device; and
   the determining the first PO based on the index of the first geographical area comprises:
   determining the first PO based on the first offset and/or the second offset, the index of the first geographical area, and one or more of the following: a paging cycle, a quantity of paging frames comprised in the paging cycle, or a quantity of POs comprised in the paging frame.

6. The method according to claim 5, wherein the first indication information further indicates the first offset corresponding to the terminal device, and a paging frame in which the first PO is located satisfies:

$$(SFN+UE\_specific\_PF\_offset) \bmod T=(T \operatorname{div} N)*(Area\ Index \bmod N),$$

wherein

SFN is a system frame number of the paging frame in which the first PO is located, UE_specific_PF_offset is the first offset, T is the paging cycle, N is the quantity of paging frames comprised in the paging cycle, and Area Index is the index of the first geographical area.

7. The method according to claim 5 or 6, wherein the first indication information further indicates the second offset corresponding to the terminal device, and a PO index of the first PO satisfies:

$$(i\_s + UE\_specific\_PO\_offset) = floor\ (Area\_index/N)\ mod\ Ns,$$

wherein

i_s is the PO index of the first PO, UE_specific_PO_offset is the second offset, Area Index is the index of the first geographical area, N is the quantity of paging frames comprised in the paging cycle, and Ns is the quantity of POs comprised in the paging frame.

8. The method according to any one of claims 1 to 7, wherein the first geographical area is smaller than a spatial coverage area of a synchronization signal block SSB beam.

9. A communication method, wherein the method comprises:

receiving center point location information of each of at least one beam and a third offset and/or a fourth offset corresponding to each beam, wherein the third offset is used for determining a paging frame corresponding to the beam, the fourth offset is used for determining a paging occasion corresponding to the beam, and a spatial coverage area of the beam is smaller than a spatial coverage area of a synchronization signal block SSB beam; determining, based on location information of a terminal device and the center point location information of each beam, a first beam in which the terminal device is located, wherein the first beam is comprised in the at least one beam; and determining a first paging occasion PO based on a third offset and/or a fourth offset corresponding to the first beam.

10. The method according to claim 9, wherein the determining the first PO based on the third offset and/or the fourth offset corresponding to the first beam comprises:
determining the first PO based on the third offset and/or the fourth offset corresponding to the first beam, and one or more of the following: a paging cycle, a quantity of paging frames comprised in the paging cycle, a quantity of POs comprised in the paging frame, or a group index of the terminal device.

11. The method according to claim 10, wherein a paging frame in which the first PO is located satisfies:

$$(SFN + beam\_specific\_PF\_offset)\ mod\ T = (T\ div\ N) * (UE\_ID\ mod\ N)$$

, wherein

SFN is a system frame number of the paging frame in which the first PO is located, beam_specific_PF_offset is the third offset corresponding to the first beam, T is the paging cycle, N is the quantity of paging frames comprised in the paging cycle, and UE_ID is an identifier of the terminal device.

12. The method according to claim 10 or 11, wherein a PO index of the first PO satisfies:

$$(i\_s + beam\_specific\_PO\_offset) = floor\ (UE\_ID/N)\ mod\ Ns,$$

wherein

i_s is the PO index of the first PO, beam_specific_PO_offset is the fourth offset corresponding to the first beam, UE_ID is the identifier of the terminal device, N is the quantity of paging frames comprised in the paging cycle, and Ns is the quantity of POs comprised in the paging frame.

13. A communication method, comprising:

determining second indication information; and

sending the second indication information, wherein the second indication information indicates a terminal identifier allocated to a terminal device, the terminal identifier is determined based on first location information, and the first location information is location information of the terminal device.

14. The method according to claim 13, wherein the terminal identifier is a 5th generationshort-temporary mobile subscription identifier 5G-S-TMSI.

15. The method according to claim 14, wherein the method further comprises:

determining, by an access network device, a first paging occasion PO based on the terminal identifier.

16. A communication method, comprising:

determining first indication information, wherein the first indication information indicates an index of a first geographical area to which first location information belongs, and the first location information is location information of a terminal device; and

sending the first indication information.

17. The method according to claim 16, wherein the method further comprises:

determining, by an access network device, a first paging occasion PO based on the index of the first geographical area.

18. The method according to claim 17, wherein the determining, by the access network device, the first PO based on the index of the first geographical area comprises:

determining, by the access network device, the first PO based on the index of the first geographical area and one or more of the following: a paging cycle, a quantity of paging frames comprised in the paging cycle, a quantity of POs comprised in the paging frame, or an offset used for determining the paging frame.

19. The method according to claim 18, wherein a paging frame in which the first PO is located satisfies:

$$(\text{SFN}+\text{PF\_offset}) \bmod T=(T \operatorname{div} N)*(\text{Area Index} \bmod N),$$

wherein

SFN is a system frame number of the paging frame in which the first PO is located, PF_offset is the offset used for determining the paging frame, T is the paging cycle, N is the quantity of paging frames comprised in the paging cycle, and Area Index is the index of the first geographical area.

20. The method according to claim 19, wherein a PO index of the first PO satisfies:

$$i\_s=\operatorname{floor}(\text{Area\_index}/N) \bmod N_s,$$

wherein

i_s is the PO index of the first PO, Area Index is the index of the first geographical area, N is the quantity of paging frames comprised in the paging cycle, and Ns is the quantity of POs comprised in the paging frame.

21. The method according to claim 17, wherein the first indication information further indicates a first offset and/or a second offset corresponding to the terminal device, the first offset is used for determining a paging frame corresponding to the terminal device, and the second offset is used for determining a paging occasion corresponding to the terminal device; and

the determining, by the access network device, the first PO based on the index of the first geographical area comprises:

determining, by the access network device, the first PO based on the first offset and/or the second offset, the index of the first geographical area, and one or more of the following: a paging cycle, a quantity of paging frames comprised in the paging cycle, or a quantity of POs comprised in the paging frame.

22. The method according to claim 21, wherein the first indication information further indicates the first offset corresponding to the terminal device, and a paging frame in which the first PO is located satisfies:

$$(SFN+UE\_specific\_PF\_offset) \bmod T=(T \operatorname{div} N)*(Area\ Index \bmod N),$$

wherein
SFN is a system frame number of the paging frame in which the first PO is located, UE_specific_PF_offset is the first offset, T is the paging cycle, N is the quantity of paging frames comprised in the paging cycle, and Area Index is the index of the first geographical area.

23. The method according to claim 21 or 22, wherein the first indication information further indicates the second offset corresponding to the terminal device, and a PO index of the first PO satisfies:

$$(i\_s+UE\_specific\_PO\_offset)=floor\ (Area\_index/N) \bmod Ns,$$

wherein
i_s is the PO index of the first PO, UE_specific_PO_offset is the second offset, Area Index is the index of the first geographical area, N is the quantity of paging frames comprised in the paging cycle, and Ns is the quantity of POs comprised in the paging frame.

24. The method according to any one of claims 16 to 23, wherein the first geographical area is smaller than a spatial coverage area of a synchronization signal block SSB beam.

25. A communication method, comprising:

sending center point location information of each of at least one beam and a third offset and/or a fourth offset corresponding to each beam, wherein the third offset is used for determining a paging frame corresponding to the beam, the fourth offset is used for determining a paging occasion corresponding to the beam, and a spatial coverage area of the beam is smaller than a spatial coverage area of a synchronization signal block SSB beam; determining, based on location information of a terminal device and the center point location information of each beam, a first beam in which the terminal device is located, wherein the first beam is comprised in the at least one beam; and determining a first paging occasion PO based on a third offset and/or a fourth offset corresponding to the first beam.

26. The method according to claim 25, wherein the determining the first PO based on the third offset and/or the fourth offset corresponding to the first beam comprises:
determining the first PO based on the third offset and/or the fourth offset corresponding to the first beam, and one or more of the following: a paging cycle, a quantity of paging frames comprised in the paging cycle, a quantity of POs comprised in the paging frame, or a group index of the terminal device.

27. The method according to claim 26, wherein a paging frame in which the first PO is located satisfies:

$$(SFN+beam\_specific\_PF\_offset) \bmod T=(T \operatorname{div} N)*(UE\_ID \bmod N),$$

wherein
SFN is a system frame number of the paging frame in which the first PO is located, beam_specific_PF_offset is the third offset corresponding to the first beam, T is the paging cycle, N is the quantity of paging frames comprised in the paging cycle, and UE_ID is an identifier of the terminal device.

28. The method according to claim 26 or 27, wherein a PO index of the first PO satisfies:

$$(i\_s+beam\_specific\_PO\_offset)=floor\ (UE\_ID/N) \bmod Ns,$$

wherein
i_s is the PO index of the first PO, beam_specific_PO_offset is the fourth offset corresponding to the first beam, UE_ID is the identifier of the terminal device, N is the quantity of paging frames comprised in the paging cycle, and Ns is the quantity of POs comprised in the paging frame.

29. A communication apparatus, comprising a unit or a module configured to perform the method according to any one of claims 1 to 8, comprising a unit or a module configured to perform the method according to any one of claims 9 to 12, comprising a unit or a module configured to perform the method according to any one of claims 13 to 15, comprising a unit or a module configured to perform the method according to claims 16 to 24, or comprising a unit or a module configured to perform the method according to claims 25 to 28.

30. A communication apparatus, comprising a processor, wherein the processor is configured to implement the method according to any one of claims 1 to 8, implement the method according to any one of claims 9 to 12, implement the method according to any one of claims 13 to 15, implement the method according to claims 16 to 24, or implement the method according to claims 25 to 28.

31. A computer-readable storage medium, wherein the storage medium stores a computer program or instructions, and when the computer program or the instructions are executed by a communication apparatus, the method according to any one of claims 1 to 8 is implemented, the method according to any one of claims 9 to 12 is implemented, the method according to any one of claims 13 to 15 is implemented, the method according to claims 16 to 24 is implemented, or the method according to claims 25 to 28 is implemented.

32. A computer program product, comprising computer program code, wherein when the computer program code is run on a computer, the method according to any one of claims 1 to 8 is implemented, the method according to any one of claims 9 to 12 is implemented, the method according to any one of claims 13 to 15 is implemented, the method according to claims 16 to 24 is implemented, or the method according to claims 25 to 28 is implemented.

33. A communication system, comprising a communication apparatus configured to implement the method according to any one of claims 1 to 8 or the method according to any one of claims 9 to 12, and a communication apparatus configured to implement the method according to any one of claims 13 to 15 or the method according to claims 16 to 24, or a communication apparatus configured to implement the method according to claims 25 to 28.

FIG. 1

FIG. 2

FIG. 3

| Terminal device | Access network device | Core network element |
|---|---|---|

S400: First indication
information 1

S401: First indication
information 2

S402: Determine a first
PO based on an index of
a first geographical area

S402: Determine a first
PO based on an index of
a first geographical area

FIG. 4

One large
terrestrial
geographical area →

| 1 | 2 | 3 | 4 | 5 | 6 | 7 | 8 | 9 | 10 |
|---|---|---|---|---|---|---|---|---|---|
| 11 | 12 | 13 | 14 | 15 | 16 | 17 | 18 | 19 | 20 |
| 21 | 22 | 23 | 24 | 25 | 26 | 27 | 28 | 29 | 30 |
| 31 | 32 | 33 | 34 | 35 | 36 | 37 | 38 | 39 | 40 |
| 41 | 42 | 43 | 44 | 45 | 46 | 47 | 48 | 49 | 50 |
| 51 | 52 | 53 | 54 | 55 | 56 | 57 | 58 | 59 | 60 |
| 61 | 62 | 63 | 64 | 65 | 66 | 67 | 68 | 69 | 70 |
| 71 | 72 | 73 | 74 | 75 | 76 | 77 | 78 | 79 | 80 |
| 81 | 82 | 83 | 84 | 85 | 86 | 87 | 88 | 89 | 90 |
| 91 | 92 | 93 | 94 | 95 | 96 | 97 | 98 | 99 | 100 |

Geographical area
obtained through
division

Spatial coverage
area of a satellite

FIG. 5

Spatial coverage area
of a narrow beam

Spatial coverage area
of a wide beam

Coverage area
of a satellite

FIG. 6

Terminal
device

Access
network
device

S701: First indication
information 3

S702: Determine a first
PO based on an index of
a first geographical area

S702: Determine a first
PO based on an index of
a first geographical area

FIG. 7

Terminal device

Access network device

S801: Center point location information of each of at least one beam and a third offset and/or a fourth offset corresponding to each beam

S802: Determine, based on location information of the terminal device and the center point location information of each beam, a first beam in which the terminal device is located, and determine a first PO based on a third offset and/or a fourth offset corresponding to the first beam

S802: Determine, based on location information of the terminal device and the center point location information of each beam, a first beam in which the terminal device is located, and determine a first PO based on a third offset and/or a fourth offset corresponding to the first beam

FIG. 8

Terminal device

Access network device

Core network element

S900: Second indication information 1

S901: Second indication information 2

S902: Determine a first PO based on a terminal identifier

S902: Determine a first PO based on a terminal identifier

FIG. 9

Spatial coverage area
of a wide beam

Spatial coverage area
of a narrow beam

FIG. 10

FIG. 11

FIG. 12

## INTERNATIONAL SEARCH REPORT

| | International application No. |
|---|---|
| | **PCT/CN2024/117955** |

### A. CLASSIFICATION OF SUBJECT MATTER

H04W68/02(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, VCN, DWPI, CNKI, IEEE, 3GPP: 窄, 波束, 地理, 区域, 位置, 覆盖, 范围, 索引, 标识, 寻呼, 时机, 机会, 终端, 确定, 偏移, 中心, SSB, narrow, beam, area, index, ID, range, PO, paging, occasion, UE, TMSI, offset, center

### C. DOCUMENTS CONSIDERED TO BE RELEVANT

| Category* | Citation of document, with indication, where appropriate, of the relevant passages | Relevant to claim No. |
|---|---|---|
| X | CN 115396992 A (HUAWEI TECHNOLOGIES CO., LTD.) 25 November 2022 (2022-11-25) description, paragraphs 0143-0172, and figures 5-6 | 1, 16-17, 29-33 |
| X | CN 112351480 A (HUAWEI TECHNOLOGIES CO., LTD.) 09 February 2021 (2021-02-09) description, paragraphs 0080-0162 | 13-15, 29-33 |
| X | JP 2003319440 A (APAS K. K. et al.) 07 November 2003 (2003-11-07) claims 1-8 | 16, 29-33 |
| A | US 2022225270 A1 (NOKIA TECHNOLOGIES OY) 14 July 2022 (2022-07-14) entire document | 1-33 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 December 2024** | **11 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| PCT/CN2024/117955 |

| Patent document cited in search report | | | Publication date (day/month/year) | Patent family member(s) | | | Publication date (day/month/year) |
|---|---|---|---|---|---|---|---|
| CN | 115396992 | A | 25 November 2022 | WO | 2024032287 | A1 | 15 February 2024 |
| CN | 112351480 | A | 09 February 2021 | WO | 2021027746 | A1 | 18 February 2021 |
| | | | | CN | 116321373 | A | 23 June 2023 |
| JP | 2003319440 | A | 07 November 2003 | | None | | |
| US | 2022225270 | A1 | 14 July 2022 | EP | 3963970 | A1 | 09 March 2022 |
| | | | | WO | 2020222070 | A1 | 05 November 2020 |

Form PCT/ISA/210 (patent family annex) (July 2022)

**REFERENCES CITED IN THE DESCRIPTION**

**Patent documents cited in the description**

- CN 202311178980X